# EUROPEAN PATENT APPLICATION

(11) **EP 3 970 882 A1**
(43) Date of publication of application: **23.03.2022**
(21) Application number: 21192781.9
(22) Date of filing: 24.08.2021
(51) Int. Cl.: B22F 10/20, B22F 10/28, B22F 10/31, B22F 12/45, B29C 64/277, B29C 64/393, B33Y 10/00, B33Y 30/00, B33Y 50/02, B22F 12/90, B29C 64/153

(54) **CALIBRATING BEAM GENERATION SYSTEMS AND IMAGING SYSTEMS FOR ADDITIVE MANUFACTURING**

(30) Priority: 17.09.2020 US 202017023731
(71) Applicant: Concept Laser GmbH, 96215 Lichtenfels (DE)
(72) Inventor: Graf, Dominic, 96215 Lichtenfels, (DE); Werner, Juergen, 96215 Lichtenfels (DE); Bokkes, Tobias, 96215 Lichtenfels, (DE)
(74) Representative: Hafner & Kohl PartmbB

(57) **Abstract**

A method of calibrating an additive manufacturing machine may include comparing a calibration image to a reference image and performing a calibration operation based at least in part on the comparison. The reference image and the calibration image may be determined from image data obtained by an imaging system included as part of or associated with an additive manufacturing machine. The reference image may portray a reference pattern having been irradiated upon a build plane of the additive manufacturing machine by a first beam generation device, and the calibration image may portray a calibration pattern having been irradiated upon the build plane of the additive manufacturing machine using a second beam generation device. The calibration operation may include calibrating an energy beam system that includes the first beam generation device and/or the second beam generation device, and/or the calibration operation may include calibrating the imaging system.

## Description

### FIELD

The present disclosure generally pertains to additive manufacturing machines and systems, and more particularly, to systems and methods of calibrating energy beam systems and/or imaging systems associated with such additive manufacturing machines and systems.

### BACKGROUND

Additive manufacturing systems and machines may include energy beam systems and/or imaging systems that may benefit from calibration operations. For example, calibration operations may be performed to align a first beam generation device with a second beam generation device.

Some calibration operations utilize special calibration plates that can be expensive and difficult to handle. For example, some calibration plates are intended to be measured externally, such as using a microscope. Additionally, typical calibration procedures can be time consuming and can require substantial user interaction with the additive manufacturing system or machine.

Accordingly, there exists a need for improved systems and methods of calibrating energy beam systems and/or imaging systems associated with such additive manufacturing machines and systems.

### BRIEF DESCRIPTION

Aspects and advantages will be set forth in part in the following description, or may be apparent from the description, or may be learned through practicing the presently disclosed subject matter.

In one aspect, the present disclosure embraces methods of calibrating an additive manufacturing machine. An exemplary method may include comparing a calibration image to a reference image and performing a calibration operation based at least in part on the comparing of the reference image to the calibration image. The reference image and the calibration image may be determined from image data obtained by one or more imaging systems included as part of or associated with an additive manufacturing machine. The reference image may portray a reference pattern having been irradiated upon a build plane of the additive manufacturing machine by a first beam generation device, and the calibration image may portray a calibration pattern having been irradiated upon the build plane of the additive manufacturing machine using a second beam generation device. The calibration operation may include calibrating an energy beam system that includes the first beam generation device and/or the second beam generation device, and/or the calibration operation may include calibrating the one or more imaging systems.

In another aspect, the present disclosure embraces additive manufacturing systems. An exemplary additive manufacturing system may include an additive manufacturing machine, one or more imaging systems included as part of or associated with the additive manufacturing machine, and a control system included as part of or associated with the additive manufacturing machine. The additive manufacturing machine may include a build plane and an energy beam system that has a first beam generation device and a second beam generation device. The first beam generation device may be configured to irradiate a reference pattern upon the build plane, and the second beam generation device configured to irradiate a calibration pattern upon the build plane. The control system may include a controller that has a control module configured to perform a method of calibrating an additive manufacturing machine in accordance with the present disclosure.

In yet another aspect, the present disclosure embraces computer-readable media. An exemplary computer-readable medium may include computer-executable instructions, which when executed by a processor, cause the processor to perform a method of calibrating an additive manufacturing machine in accordance with the present disclosure.

These and other features, aspects and advantages will become better understood with reference to the following description and appended claims. The accompanying drawings, which are incorporated in and constitute a part of this specification, illustrate exemplary embodiments and, together with the description, serve to explain certain principles of the presently disclosed subject matter.

### BRIEF DESCRIPTION OF THE DRAWINGS

A full and enabling disclosure, including the best mode thereof, directed to one of ordinary skill in the art, is set forth in the specification, which makes reference to the appended Figures, in which:
FIG. 1 schematically depicts an exemplary additive manufacturing system;
FIG. 2A schematically depicts an exemplary energy beam system;
FIGs. 2B and 2C schematically depict exemplary imaging systems;
FIGs. 3A and 3B schematically depict exemplary reference patterns and calibration patterns that have been irradiated upon a build plane of an additive manufacturing machine;
FIG. 4A schematically depicts exemplary image data corresponding to a reference pattern and a calibration pattern shown in FIG. 3B;
FIG. 4B schematically depicts exemplary calibration data that reflects a calibration adjustment applied to the image data shown in FIG. 4A;
FIG. 5 schematically depict further exemplary reference patterns and calibration patterns that have been irradiated upon a build plane of an additive manufacturing machine;
FIG. 6A schematically depicts exemplary image data corresponding to a reference pattern and a calibration pattern shown in FIG. 5;
FIG. 6B schematically depicts exemplary calibration data that reflects a calibration adjustment applied to the image data shown in FIG. 6A;
FIGs. 7A and 7B schematically depict further exemplary reference patterns and calibration patterns that have been irradiated upon a build plane of an additive manufacturing machine;
FIG. 8A schematically depicts exemplary image data corresponding to a reference pattern and a calibration pattern shown in FIG. 7A;
FIG. 8B schematically depicts exemplary calibration data that reflects a calibration adjustment applied to the image data shown in FIG. 8A;
FIG. 9 schematically depicts an exemplary control system that includes controller configured to perform one or more calibration operations; and
FIG. 10 shows a flow chart depicting an exemplary method of additively manufacturing a three-dimensional object.

Repeat use of reference characters in the present specification and drawings is intended to represent the same or analogous features or elements of the present disclosure.

### DETAILED DESCRIPTION

Reference now will be made in detail to exemplary embodiments of the presently disclosed subject matter, one or more examples of which are illustrated in the drawings. Each example is provided by way of explanation and should not be interpreted as limiting the present disclosure. In fact, it will be apparent to those skilled in the art that various modifications and variations can be made in the present disclosure without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

The present disclosure generally provides systems and methods of calibrating one or more aspects of features of an additive manufacturing machine. Exemplary systems and methods provide for calibrating a first beam generation device and a second beam generation device relative to one another and/or relative to an imaging system. In some embodiments, a first beam generation device may be utilized to irradiate a reference pattern on the build plane and a second beam generation device may be used to irradiate a calibration pattern on the build plane. The reference pattern and the calibration pattern may be determined optically using an imaging system. For example, a reference image portraying the reference pattern and a calibration image portraying the calibration pattern may be determined from image data obtained with the imaging system. The calibration image may be compared to the reference image. In some embodiments, a reference centroid may be compared to a calibration centroid. An alignment and/or misalignment between the calibration pattern and the reference pattern may be determined. A calibration adjustment may be performed, for example, to align the first beam generation device with the second beam generation device.

As described herein, exemplary embodiments of the present subject matter involve the use of additive manufacturing machines or systems. As used herein, the term "additive manufacturing" refers generally to manufacturing technology in which components are manufactured in a layer-by-layer manner. An exemplary additive manufacturing machine may be configured to utilize any desired additive manufacturing technology. In an exemplary embodiment, the additive manufacturing machine may utilize an additive manufacturing technology that includes a powder bed fusion (PBF) technology, such as a direct metal laser melting (DMLM) technology, an electron beam melting (EBM) technology, an electron beam sintering (EBS) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature, and may have a variety of integral subcomponents.

Additionally or alternatively suitable additive manufacturing technologies include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, Vat Polymerization (VP) technology, Sterolithography (SLA) technology, and other additive manufacturing technology that utilizes an energy beam.

Additive manufacturing technology may generally be described as enabling fabrication of complex objects by building objects point-by-point, layer-by-layer, typically in a vertical direction; however, other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, concrete, or any other suitable material that may be in solid, liquid, powder, sheet material, wire, or any other suitable form. Each successive layer may be, for example, between about 10 µm and 200 µm, although the thickness may be selected based on any number of parameters and may be any suitable size according to alternative embodiments.

As used herein, the term "build plane" refers to a plane defined by a surface upon which an energy beam impinges during an additive manufacturing process. Generally, the surface of a powder bed defines the build plane; however, during irradiation of a respective layer of the powder bed, a previously irradiated portion of the respective layer may define a portion of the build plane, and/or prior to distributing powder material across a build module, a build plate that supports the powder bed generally defines the build plane.

As used herein, the term "normal point" refers to a location on the build plane corresponding to an energy beam where the energy beam, when incident upon the build plane, would be oriented normal to the build plane.

It is understood that terms "upstream" and "downstream" refer to the relative direction with respect to fluid flow in a fluid pathway. For example, "upstream" refers to the direction from which the fluid flows, and "downstream" refers to the direction to which the fluid flows. It is also understood that terms such as "top", "bottom", "outward", "inward", and the like are words of convenience and are not to be construed as limiting terms. As used herein, the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

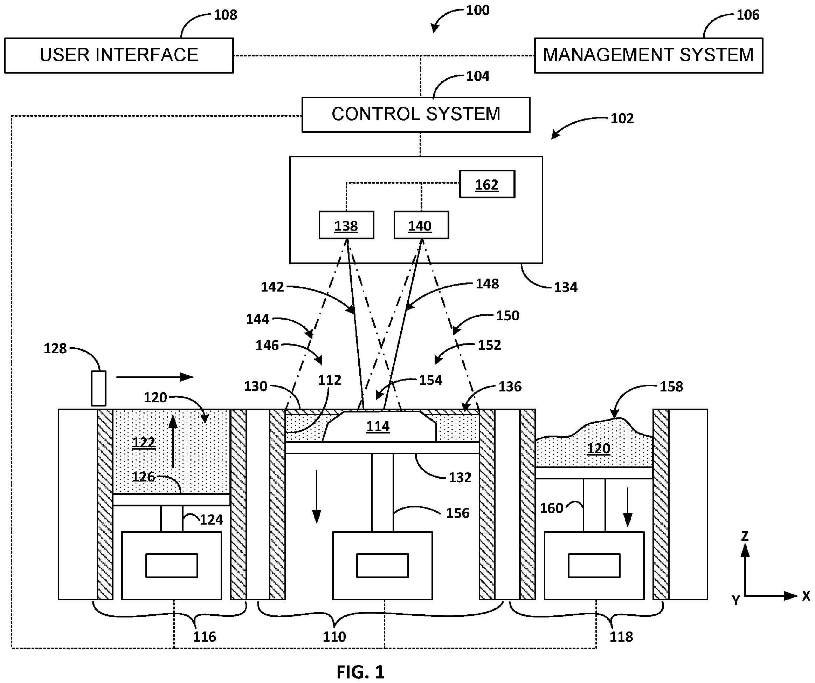

Exemplary embodiments of the present disclosure will now be described in further detail. FIG. 1 schematically depicts an exemplary additive manufacturing system 100. The additive manufacturing system 100 may include one or more additive manufacturing machines 102. The one or more additive manufacturing machines 102 may include a control system 104. The control system 104 may be included as part of the additive manufacturing machine 102 or the control system 104 may be associated with the additive manufacturing machine 102. The control system 104 may include componentry integrated as part of the additive manufacturing machine 102 and/or componentry that is provided separately from the additive manufacturing machine 102. Various componentry of the control system 104 may be communicatively coupled to various componentry of the additive manufacturing machine 102.

The control system 104 may be communicatively coupled with a management system 106 and/or a user interface 108. The management system 106 may be configured to interact with the control system 104 in connection with enterprise-level operations pertaining to the additive manufacturing system 100. Such enterprise level operations may include transmitting data from the management system 106 to the control system 104 and/or transmitting data from the control system 104 to the management system 106. The user interface 108 may include one or more user input/output devices to allow a user to interact with the additive manufacturing system 100.

As shown, an additive manufacturing machine 102 may include a build module 110 that includes a build chamber 112 within which an object or objects 114 may be additively manufactured. In some embodiments, an additive manufacturing machine 102 may include a powder module 116 and/or an overflow module 118. The build module 110, the powder module 116, and/or the overflow module 118 may be provided in the form of modular containers configured to be installed into and removed from the additive manufacturing machine 102 such as in an assembly-line process. Additionally, or in the alternative, the build module 110, the powder module 116, and/or the overflow module 118 may define a fixed componentry of the additive manufacturing machine 102.

The powder module 116 contains a supply of powder material 120 housed within a supply chamber 122. The powder module 116 includes a powder piston 124 that elevates a powder floor 126 during operation of the additive manufacturing machine 102. As the powder floor 126 elevates, a portion of the powder material 120 is forced out of the powder module 116. A recoater 128 such as a blade or roller sequentially distributes thin layers of powder material 120 across a build plane 130 above the build module 110. A build platform 132 supports the sequential layers of powder material 120 distributed across the build plane 130. In some embodiments, a build platform 132 may include a build plate (not shown) secured thereto and upon which an object 114 may be additively manufactured.

The additive manufacturing machine 102 includes an energy beam system 134 configured to generate a plurality of energy beams such as laser beams or electron beams, and to direct the respective energy beams onto the build plane 130 to selectively solidify respective portions of the powder bed 136 defining the build plane 130. As the respective energy beams selectively melt or fuse the sequential layers of powder material 120 that define the powder bed 136, the object 114 begins to take shape. Typically with a DMLM, EBM, or SLM system, the powder material 120 is fully melted, with respective layers being melted or re-melted with respective passes of the energy beams. Conversely, with DMLS or SLS systems, typically the layers of powder material 120 are sintered, fusing particles of powder material 120 to one another generally without reaching the melting point of the powder material 120. The energy beam system 134 may include componentry integrated as part of the additive manufacturing machine 102 and/or componentry that is provided separately from the additive manufacturing machine 102.

The energy beam system 134 may include one or more irradiation devices configured to generate a plurality of energy beams and to direct the energy beams upon the build plane 130. The irradiation devices may respectively have an energy beam source, a galvo-scanner, and optical componentry configured to direct the energy beam onto the build plane 130. For the embodiment shown in FIG. 1, the energy beam system 134 includes a first irradiation device 138 and a second irradiation device 140. In other embodiments, an energy beam system 134 may include three, four, six, eight, ten, or more irradiation devices. The plurality of irradiation devise may be configured to respectively generate one or more energy beams that are respectively scannable within a scan field incident upon at least a portion of the build plane 130. For example, the first irradiation device 138 may generate a first energy beam 142 that is scannable within a first scan field 144 incident upon at least a first build plane region 146. The second irradiation device 140 may generate a second energy beam 148 that is scannable within a second scan field 150 incident upon at least a second build plane region 152. The first scan field 144 and the second scan field 150 may at least partially overlap such that the first build plane region 146 scannable by the first energy beam 142 overlaps with the second build plane region 152 scannable by the second energy beam 148. The overlapping portion of the first build plane region 146 and the second build plane region 152 may sometimes be referred to as an interlace region 154. Portions of the powder bed 136 to be irradiated within the interlace region 154 may be irradiated by the first energy beam 142 and/or the second energy beam 148 in accordance with the present disclosure.

To irradiate a layer of the powder bed 136, the one or more irradiation devices (e.g., the first irradiation device 138 and the second irradiation device 140) respectively direct the plurality of energy beams (e.g., the first energy beam 142 and the second energy beam 148) across the respective portions of the build plane 130 (e.g., the first build plane region 146 and the second build plane region 152) to melt or fuse the portions of the powder material 120 that are to become part of the object 114. The first layer or series of layers of the powder bed 136 are typically melted or fused to the build platform 132, and then sequential layers of the powder bed 136 are melted or fused to one another to additively manufacture the object 114.

As sequential layers of the powder bed 136 are melted or fused to one another, a build piston 156 gradually lowers the build platform 132 to make room for the recoater 128 to distribute sequential layers of powder material 120. As the build piston 156 gradually lowers and sequential layers of powdered material 120 are applied across the build plane 130, the next sequential layer of power material 120 defines the surface of the powder bed 136 coinciding with the build plane 130. Sequential layers of the powder bed 136 may be selectively melted or fused until a completed object 114 has been additively manufactured.

In some embodiments, an additive manufacturing machine may utilize an overflow module 118 to capture excess powder material 120 in an overflow chamber 158. The overflow module 118 may include an overflow piston 160 that gradually lowers to make room within the overflow chamber 158 for additional excess powder material 120.

It will be appreciated that in some embodiments an additive manufacturing machine may not utilize a powder module 116 and/or an overflow module 118, and that other systems may be provided for handling powder material 120, including different powder supply systems and/or excess powder recapture systems. However, the subject matter of the present disclosure may be practiced with any suitable additive manufacturing machine without departing from the scope hereof.

Still referring to FIG. 1, in some embodiments, an additive manufacturing machine 102 may include an imaging system 162. The imaging system 162 may be configured to detect a monitoring beam (not shown) such as an infrared beam from a laser diode and/or a reflected portion of an energy beam (e.g., a first energy beam 142 and/or a second energy beam 148). The imaging system 162 may be configured to determine one or more parameters associated with irradiating the sequential layers of the powder bed 136 based at least in part on the detected monitoring beam. One or more parameters associated with irradiating the sequential layers of the powder bed 136 may include irradiation parameters and/or object parameters, such as melt pool monitoring parameters. The one or more parameters determined by the imaging system 162 may be utilized, for example, by the control system 104, to control one or more operations of the additive manufacturing machine 102 and/or of the additive manufacturing system 100.

In addition or in the alternative to determining parameters associated with irradiation the sequential layers of the powder bed 136, the imaging system 162 may be configured to perform one or more calibration operations associated with an additive manufacturing machine 102, such as a calibration operation associated with the energy beam system 134, one or more irradiation devices 138, 140 or components thereof, and/or the imaging system 162 or components thereof.

The imaging system 162 may be configured to project a monitoring beam (not shown) and to detect a portion of the monitoring beam reflected from the build plane 130. Additionally, and/or in the alternative, the imaging system 162 may be configured to detect a monitoring beam that includes radiation emitted from the build plane 130, such as radiation from an energy beam 142, 148 reflected from the powder bed 136 and/or radiation emitted from a melt pool in the powder bed 136 generated by an energy beam 142, 148 and/or radiation emitted from a portion of the powder bed 136 adjacent to the melt pool.

The imaging system 162 may include componentry integrated as part of the additive manufacturing machine 102 and/or componentry that is provided separately from the additive manufacturing machine 102. For example, the imaging system 162 may include componentry integrated as part of the energy beam system 134. Additionally, or in the alternative, the imaging system 162 may include separate componentry, such as in the form of an assembly, that can be installed as part of the energy beam system 134 and/or as part of the additive manufacturing machine 102.

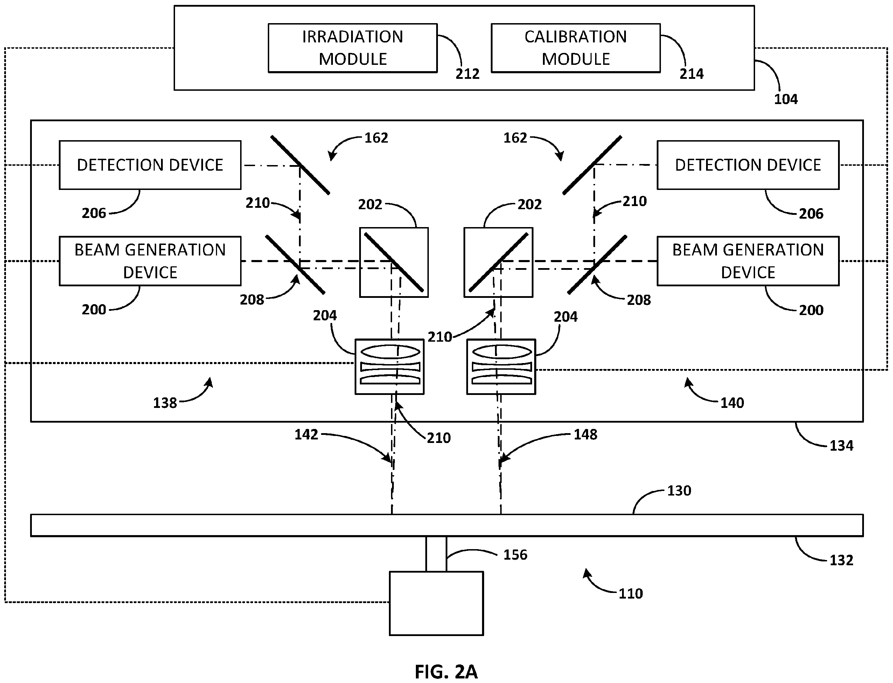

Now turning to FIG. 2A-2C, exemplary energy beam systems 134 will be described, including exemplary irradiation devices 138, 140 and exemplary imaging systems 162. As shown in FIG. 2A, an energy beam system 134 may include a plurality of irradiation devices, such as a first irradiation device 138 and a second irradiation device 140. An irradiation device 138, 140 may include a beam generation device 200, a scanner 202, and an optical assembly 204. The beam generation device 200 may be configured to generate one or more energy beams, such as a first energy beam 142 and/or a second energy beam 148. The one or more energy beams 142, 148generated by a beam generation device 200 may be a laser beam or an electron beam. A scanner 202 corresponding to a respective beam generation device 200 may be configured to control the orientation of the corresponding energy beam 142, 148 so as to direct the path of the energy beam 142, 148 across a build plane 130, such as a powder bed 136 and/or a build platform 132. The optical assembly 204 may include one or more lenses configured to focus, collimate, expand, shape and/or filter the energy beam 142, 148.

An energy beam system 134 and/or an imaging system 162 may include one or more detection devices 206. The respective detection devices 206 may be configured to obtain image data of the build plane 130 from the respective imaging beams 210. An exemplary detection device 206 may include a camera, an image sensor, a photo diode assembly, or the like. For example, a detection device 206 may include charge-coupled device (e.g., a CCD sensor), an active-pixel sensor (e.g., a CMOS sensor), a quanta image device (e.g., a QIS sensor), or the like. A detection device 206 may additionally include a lens assembly configured to focus an imaging beam 210 along a beam path to the detection device 206. An imaging system 162 may include one or more imaging optical elements 208, such as mirrors, beam splitters, lenses, and the like, configured to direct an imaging beam 210 to a corresponding detection device 206.

As shown in FIG. 2A, in some embodiments, an imaging system 162 and/or a detection device 206 may be integrated as part of an energy beam system 134 and/or as part of an irradiation device 138, 140. Additionally, or in the alternative, an imaging system 162 and/or a detection device 206 may be provided as a separate system or unit. As shown in FIG. 2A, an energy beam system 134 and/or an imaging system 162 may include a detection device 206 configured to receive an imaging beam 210 emanating from the build plane 130 and following at least a portion of the beam path of an energy beam 142, 148 from a corresponding irradiation device 138, 140. The beam path of the respective imaging beam 210 may include one or more beam splitters, mirrors, filters, and/or lenses, or the like, configured to direct the respective imaging beam 210 from the beam path of the corresponding energy beam 142, 148 to the respective detection device 206.

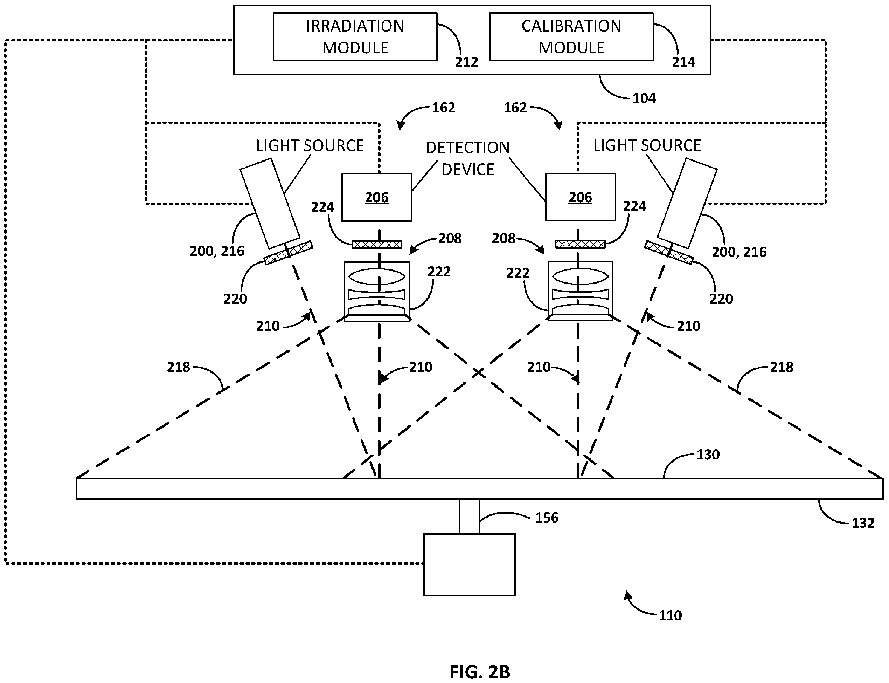

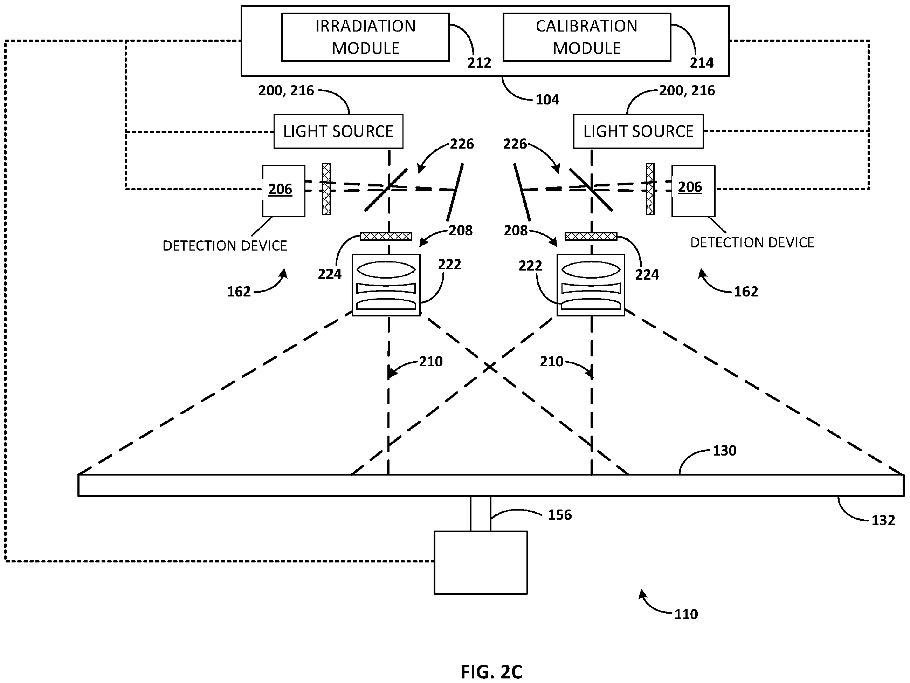

As shown in FIGs. 2B and 2C, energy beam system 134 and/or an imaging system 162 may include a light source 216 such as a laser diode, a laser diode array, an LED diode, an LED diode array, or the like. In some embodiments, a beam generation device 200 such as an irradiation device 138, 140 may serve as the light source 216. Additionally, or in the alternative, the light source 216 may be provided separately from a beam generation device 200. The light source 216 may emit an imaging beam 210 that impinges on the build plane 130 in a field of view 218 of the detection device 206. The field of view 218 may include all or a portion of the build plane 130. In some embodiments, the field of view 218 of a detection device 206 may correspond to a scan field 144, 150 of a corresponding energy beam 142, 148 from a respective irradiation device 138, 140. For example, a first detection device 206 may have a first field of view 218 corresponding to a first scan field 144, and/or a second detection device 206 may have a second field of view 218 corresponding to a second scan field 150. The first and second fields of view 218 may overlap, such as in correspondence with the interlace region 154.

The imaging beam 210 may follow an optical path that passes through one or more projection optical elements 220 prior to impinging upon the build plane 130. The one or more projection optical elements 220 may include one or more lenses, filters, diffusers, apertures or other optical element, as well as combinations of these. In some embodiments, a projection optical element 220 may be configured to provide a collimated and/or focused imaging beam 210. Additionally, or alternatively, a projection optical element 220 may be configured to filter the imaging beam 210 to provide a particular wavelength or wavelength range.

In some embodiments, the projection optical element 220 may be configured to project the imaging beam 210 onto the build plane 130 in the form of a structured light pattern and/or a modulated light pattern. Any suitable structured light pattern and/or modulated light pattern may be provided. The structured and/or modulated light pattern may be utilized in a calibration operation as described herein.

After impinging upon the build plane 130, the imaging beam 210 reflected from the build plane 130 may follow an optical path to the detection device 206. The optical path from the build plane 130 to the detection device 206 may include one or more imaging optical elements 208. The one or more imaging optical elements 208 may include one or more lenses, filters, diffusers, apertures or other optical element, as well as combinations of these. For example, as shown, the one or more imaging optical elements 208 may include an imaging lens assembly 222 and/or a filter element 224. In some embodiments, the imaging lens assembly 222 may be included as part of an optical assembly 204 of an irradiation device 138, 140, such as shown in FIG. 2A. The imaging lens assembly 222 may include one or more lenses or other optical elements configured to focus the imaging beam 210 incident upon the detection device 206. The filter element 224 may include one or more filters, diffusers, and/or apertures configured to conform the imaging beam 210 incident upon the detection device 206 to a certain wavelength or range of wavelengths. The filter element 224 may be configured to filter the imaging beam 210 to provide a particular wavelength or wavelength range. As shown in FIG. 2C, in some embodiments, the imaging system 162 may include an interferometer 226 or a series of optical elements configured to perform interferometry. By way of example, the interferometer 226 may be configured as a Michelson interferometer, a Mach-Zehnder interferometer, an Fabry-Perot Interferometer, a Sagnac Interferometer, a common-path Interferometer, and so forth. In some embodiments, the interferometer 226 may be configured to impart a wavelength shift that allows a corresponding detection device 206 to differentiate an imaging beam 210 from an energy beam 142, 148.

The one or more detection devices 206 may be communicatively coupled with a control system 104. The control system 104 may be configured to provide a control command to the energy beam system 134 such as an irradiation control command and/or a calibration control command. For example, the control system 104 may include an irradiation module 212 configured to provide irradiation control commands and/or a calibration module 214 configured to provide calibration control commands. An irradiation control command may be configured to cause the energy beam system 134 to irradiate a portion of the build plane 130 using one or more of the energy beams 142, 148, such as in connection with an additive manufacturing operation and/or in connection with a calibration operation. A calibration control command may be configured to cause an energy beam system 134 and/or an imaging system 162 to perform one or more calibration operations for which the irradiation module 212 and/or the calibration module 214 may be configured. In some embodiments, a calibration control command may be configured to cause the energy beam system 134 and/or one or more beam generation devices 200 to irradiate a portion of the build plane 130. For example, the calibration control command may be configured to cause one or more irradiation devices 138, 140 to irradiate a portion of the build plane 130 with a respective energy beam 142, 148 in accordance with a calibration operation. Additionally, or in the alternative, a calibration control command may be configured to cause a light source 216 to irradiate a portion of the build plane 130 with an imaging beam 210 in accordance with a calibration operation. In some embodiments, a calibration operation may utilize one or more irradiation devices 138, 140 and one or more light sources 216 in concert with one another. Additionally, or in the alternative, a calibration operation may utilize an imaging beam 210 from one or more irradiation devices 138, 140 and/or one or more light sources 216 in concert with one another.

The one or more detection devices 206 may be configured to provide an input to the control system 104, which may include a signal and/or data generated by a detection device 206 based at least in part on an imaging beam 210. The control system 104 may be configured to generate image data based at least in part on an input from a detection device 206, and/or an input from the detection device 206 may include image data. The image data may be utilized by the control system 104, such as to perform operations including additive manufacturing calibrations and/or control operations as described herein. In some embodiments, a calibration control command may be configured to cause a detection device 206 to provide an input to the control system 104 in connection with a calibration operation. The input to the control system 104 may include a signal and/or data generated by a detection device 206, such as image data, corresponding to a calibration operation.

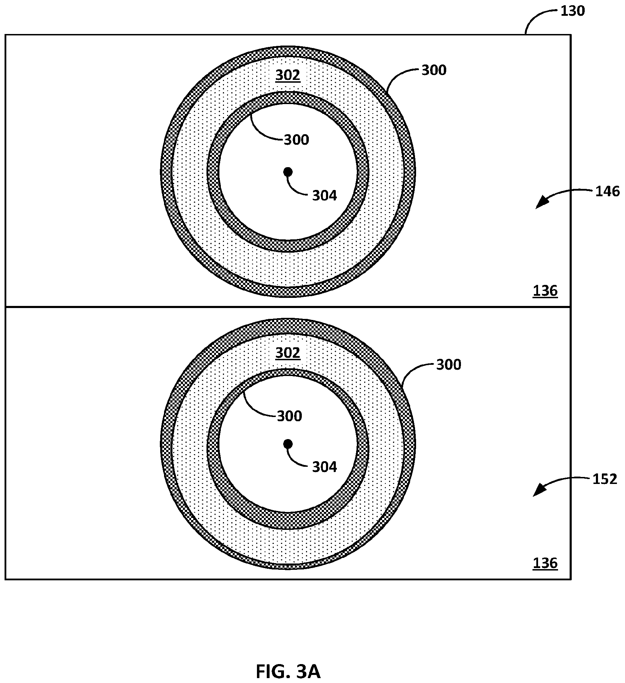

Now referring to FIGs. 3A and 3B, FIGs. 4A and 4B, FIG. 5, FIGs. 6A and 6B, FIGs. 7A and 7B, and FIGs. 8A and 8B, exemplary calibration operations will be described.

FIGs. 3A and 3B, FIG. 5, 7A and 7B, show exemplary reference patterns 300 and calibration patterns 302 that have been irradiated upon a build plane 130. One or more reference patterns 300 and/or one or more calibration patterns 302 may be irradiated upon a build plane 130 by a beam generation device 200, such as the first irradiation device 138 and/or the second irradiation device 140. Additionally, or in the alternative, the calibration pattern may be irradiated upon a build plane 130 by a light source 216. A calibration pattern 302 may be compared to a corresponding reference pattern 300. As shown in the respective figures, in some embodiments, a calibration pattern 302 may be aligned with a corresponding a reference pattern 300 and/or a calibration pattern 302 may be misaligned with a corresponding reference pattern 300. A calibration pattern 302 may be considered aligned with a corresponding reference pattern 300 when the calibration pattern 302 and the reference pattern 300 are aligned within a determined tolerance level that may include but need not be limited to perfect alignment. A calibration pattern 302 may be considered misaligned with a corresponding reference pattern 300 when the calibration pattern 302 and the reference pattern 300 are misaligned within a determined tolerance level that may include but need not be limited to perfect alignment. Any suitable tolerance level may be selected for determining whether a calibration pattern 302 is aligned and/or misaligned with a corresponding reference pattern 300, for example, based on a desired level of precision for the components and/or systems being calibrated and/or for the respective calibration operation being performed. Such alignment and/or misalignment may be determined with respect to any one or more properties of a calibration pattern 302 and/or reference pattern 300, including, for example, offset, askew, shift, tilt, twist, sphericity, dimensions, distortion, coordinate locations, and the like. Such alignment and/or misalignment may be determined with respect to any one or more locations relative to a calibration pattern 302 and/or reference pattern 300, including, for example, a center point, a centroid, one or more perimeter points, one or more corner points, a position and/or orientation of one or more perimeter lines, a position and/or orientation of one or more boundary lines, and the like.

In some embodiments, at least one dimension of a reference pattern 300 may differ from at least one corresponding dimension of a calibration pattern 302. Additionally, or in the alternative, at least a portion of the reference pattern 300 may be configured to be disposed about a portion of the build plane 130 that differs from a corresponding portion of the calibration pattern 302. For example, at least a portion of the reference pattern 300 may correspond to X,Y coordinates of the build plane 130 that differ from X,Y coordinates of the build plane 130 for a corresponding portion of the calibration pattern 302. For example, at least one dimension of the reference pattern 300 may be larger than a corresponding at least one dimension of the calibration pattern 302. Additionally, or in the alternative, at least one dimension of the reference pattern 300 may be smaller than a corresponding at least one dimension of the calibration pattern 302. In some embodiments, when aligned, a calibration pattern 302 and a reference pattern 300 may have a common centroid.

In some embodiments, a reference pattern 300 and/or a calibration pattern 302 may have a circular or annular shape. The reference pattern 300 and the calibration pattern 302 may be configured to have a concentric orientation relative to one another. The calibration pattern 302 may be configured to overlap at least a portion of the reference pattern 300. A circular or annular shape may be particularly suitable for comparing a calibration pattern 302 to a reference pattern 300, such as determining an alignment and/or misalignment between a calibration pattern 302 and a reference pattern 300. For example, a center point and/or a centroid may be determined for the calibration pattern 302 and the reference pattern 300. An alignment and/or misalignment may be determined by comparing the coordinates of the centroid determined for the calibration pattern 302 to the coordinates of the centroid determined for the reference pattern 300. Advantageously, a centroid may provide a single point of comparison for determining an alignment and/or misalignment. As a result, an alignment and/or misalignment may be determined, and a corresponding calibration adjustment may be applied, without requiring a comparison of a multitude of calibration points across a build plane 130. This may allow for faster processing times for performing calibration operations.

Additionally, or in the alternative, an alignment and/or misalignment may be determined for one or more sectors, such as one or more circular sectors and/or one or more annulus sector, by comparing the coordinates of the centroid determined for the one or more sectors of the calibration pattern 302 to the coordinates of the centroid determined for the one or more sectors of the reference pattern 300. In some embodiments, by determining an alignment and/or misalignment with respect to one or more sectors, a calibration adjustment may be performed with respect to a particular sector and/or a magnitude of a calibration adjustment may differ as between respective ones of a plurality of sectors. Advantageously, a centroid respective ones of a plurality of sectors may provide a single point of comparison for determining an alignment and/or misalignment of respective ones of the plurality of sectors. As a result, an alignment and/or misalignment may be determined, and a corresponding calibration adjustment may be applied, for respective ones of the plurality of sectors without requiring a comparison of a multitude of calibration points across a build plane 130 for the respective sectors. This may allow for faster processing times for performing calibration operations.

While examples are given for circular or annular calibration patterns 302 and corresponding reference patterns 300, it will be apricated, however, that such shapes are provided by way of example and are not to be limiting. In fact, a reference pattern 300 and/or a calibration pattern 302 may have any suitable shape, configuration, and/or arrangement. For example, a multitude of shapes exist that may be suitable for providing a single point of comparison for determining an alignment and/or misalignment (e.g., for an entirety of a calibration pattern 302 and/or for one or more of a plurality of regions of the calibration pattern 302), and/or for applying a corresponding calibration adjustment (e.g., for an entirety of a calibration pattern 302 and/or for one or more of a plurality of regions of the calibration pattern 302) without requiring a comparison of a multitude of calibration points across a build plane 130, for example, allowing for faster processing times for performing calibration operations.

A calibration operation may utilize one or more reference patterns 300 and/or corresponding calibration patterns 302, including a plurality of differently shaped reference patterns 300 and/or corresponding calibration patterns 302. In some embodiments, a calibration operation may utilize a sequence of reference patterns 300 that have a different configuration, arrangement and/or shape relative to one another. Additionally, or in the alternative, a calibration operation may utilize a sequence of calibration patterns 302 that have a different configuration, arrangement and/or shape relative to one another. The one or more reference patterns 300 may have a configuration, arrangement and/or shape that are respectively the same or different from the corresponding one of the one or more calibration patterns 302. In some embodiments, a calibration operation that utilizes a plurality of differently shaped reference patterns 300 and/or corresponding calibration patterns 302, and/or a plurality of different configurations and/or arrangements thereof, may advantageously provide additional, precision, accuracy, and/or nuanced calibration data from the calibration operation. Such additional precision, accuracy, and/or nuanced calibration data may allow for more precise, accurate, and/or nuanced calibration adjustments, which, in turn, may allow for improved precision and/or accuracy of additive manufacturing operations.

A reference pattern 300 and/or a calibration pattern 302 may include a one-dimensional, two-dimensional, and/or three-dimensional configuration, arrangement and/or shape. A calibration operation may utilize a combination of one-dimensional, two-dimensional, and/or three-dimensional reference patterns 300 and/or a calibration patterns 302. A one-dimensional reference pattern 300 and/or calibration pattern 302 may include a linear and/or curvilinear configuration, arrangement, and/or shape. A two-dimensional reference pattern 300 and/or calibration pattern 302 may have or include any polygon, circle, and/or ellipse shape, with any configuration and/or arrangement thereof. A two-dimensional reference pattern 300 and/or calibration pattern 302 may be defined by a boundary or contour, and optionally, one or more interior regions delimited by the boundary or contour may be at least partially filled with hatches.

Exemplary polygons that may be included in or utilized as a reference pattern 300 and/or calibration pattern 302 include triangles, quadrilaterals, pentagons, hexagons, and so forth. Exemplary polygons may include convex shapes, concave shapes, star-shapes, cyclic shapes, and so forth. Exemplary polygons may include simple boundaries and/or self-intersecting boundaries. In some embodiments, a reference pattern 300 and/or calibration pattern 302 may utilize or include one or more annular or semi-annular shape, and/or one or more concentric shapes. Additionally, or in the alternative, a reference pattern 300 and/or a calibration pattern 302 may utilize or include one or more tangent sweeps.

In some embodiments, a reference pattern 300 and/or a calibration pattern 302 may include a self-intersecting polygon. With a self-intersecting polygon, a first intersecting portion of the polygon may be overlapped by a second intersecting portion of the polygon. In some embodiments, the first intersecting portion may define a reference pattern 300 and the second intersecting portion may define a calibration pattern 302. By way of example, a self-intersecting polygon may be utilized to perform a calibration operation with respect to a reference pattern 300 and a calibration pattern 302 irradiated upon a build plane 130 by the same energy beam (e.g., a first energy beam 142 or a second energy beam 148), such as with one or more different irradiation parameters.

A three-dimensional reference pattern 300 may be generated by irradiating a series of one-dimensional and/or two-dimensional reference patterns 300, such as upon sequential layers of a powder bed 136. Additionally, or in the alternative, a three-dimensional calibration pattern 302 may be generated by irradiating a series of one-dimensional and/or two-dimensional calibration patterns 302, such as upon sequential layers of a powder bed 136. A three-dimensional reference pattern 300 and/or calibration pattern 302 may be defined by a boundary or contour, and optionally, one or more interior regions delimited by the boundary or contour may be at least partially filled with hatches. Exemplary three-dimensional reference patterns 300 and/or calibration patterns 302 may be or include any polyhedron, sphere, and/or ellipsoid shape. Exemplary polyhedron that may be included in or utilized as a reference pattern 300 and/or calibration pattern 302 include any three-dimensional combination of polygon, circle, and/or ellipse shape, such as tetrahedrons, cubes, octahedrons, dodecahedrons, icosahedrons, prisms, antiprisms, frustums, cylinders, and so forth.

To perform a calibration operation, a reference pattern 300 and a calibration pattern 302 may be irradiated upon a build plane 130. The reference pattern 300 may be irradiated upon the build plane 130 by an energy beam 142, 148 from a beam generation device 200, such as a first energy beam 142 from a first irradiation device 138, and/or a second energy beam 148 from a second irradiation device 140. The reference pattern 300 may melt and/or sinter a surface region of the build plane 130, such as a surface region of a powder bed 136 and/or a surface region of a build platform 132 (e.g., a build plate). The melted and/or sintered surface of the reference pattern 300 may be visually and/or optically detectable at one or more wavelengths. Additionally, or in the alternative, the reference pattern 300 may be irradiated upon the build plane 130 by a light source 216 included as part of or associated with an imaging system 162. The light source 216 and/or the imaging system 162 may be associated with the first irradiation device 138 and/or the second irradiation device 140. The light source 216 may provide a reference pattern 300 projected upon the build plane 130 that is visually or optically detectable at one or more wavelengths. Regardless of whether the reference pattern 300 is melted and/or sintered upon the build plane 130, or projected upon the build plane 130 by a light source 216, the reference pattern 300 may have one or more characteristics that may be visually and/or optically distinguishable from other portions of the build plane 130, such as with image data from a detection device 206.

A calibration pattern 302 corresponding to the reference pattern 300 may be irradiated upon the build plane 130 by an energy beam 142, 148 from a beam generation device 200, such as a first energy beam 142 from a first irradiation device 138, and/or a second energy beam 148 from a second irradiation device 140. For example, with a reference pattern 300 irradiated upon the build plane 130 by a first energy beam 142, a corresponding calibration pattern 302 may be irradiated upon the build plane 130 by the second energy beam 148. The calibration pattern 302 may melt and/or sinter a surface region of the build plane 130, such as a surface region of a powder bed 136 and/or a surface region of a build platform 132 (e.g., a build plate). The melted and/or sintered surface of the calibration pattern 302 may be visually and/or optically detectable at one or more wavelengths or wavelength ranges.

In some embodiments, the melted and/or sintered surface of a calibration pattern 302 may be visually and/or optically differentiated from a melted and/or sintered surface of a reference pattern 300 and/or from portions of the build plane 130 that have not been irradiated. For example, the energy density imparted to the build plane 130 by the reference pattern 300 may differ from the energy density imparted to the build plane 130 by the calibration pattern 302. Additionally, or in the alternative, a reference pattern 300 may be irradiated upon the build plane 130 according to a first irradiation sequence that includes a first hatching pattern and/or a calibration pattern 302 may be irradiated upon the build plane 130 according to a second irradiation sequence that includes a second hatching pattern. A difference in energy density imparted to the build plane 130 and/or a difference in hatching pattern may be visually and/or optically detectable. A reference pattern 300 may thus be visually and/or optically determined at a first wavelength or wavelength range, a calibration pattern 302 may be visually and/or optically determined at a second wavelength or wavelength range, and/or a portion of the build plane 130 that has not been irradiated may be visually and/or optically detectable at a third wavelength or wavelength range.

Additionally, or in the alternative, the calibration pattern 302 may be irradiated upon the build plane 130 by a light source 216 included as part of or associated with an imaging system 162, for example, to perform a calibration operation with respect to the light source 216. The light source 216 and/or the imaging system 162 may be associated with the first irradiation device 138 and/or the second irradiation device 140. The light source 216 may provide a calibration pattern 302 projected upon the build plane 130 that is visually or optically detectable at one or more wavelengths. For example, with a reference pattern 300 irradiated upon the build plane 130 by an energy beam 142, 148, a corresponding calibration pattern 302 may be irradiated upon the build plane 130 by a light source 216. With a reference pattern 300 irradiated upon the build plane 130 by a light source 216, such as a first light source 216 associated with a first imaging system 162 and/or a first irradiation device 138, a corresponding calibration pattern 302 may be irradiated upon the build plane 130 by a second light source 216, such as a second light source 216 associated with a second imaging system 162 and/or a second irradiation device 140. Regardless of whether the calibration pattern 302 is melted and/or sintered upon the build plane 130, or projected upon the build plane 130 by a light source 216, the calibration pattern 302 may be visually and/or optically distinguishable from the reference pattern 300 and/or from other portions of the build plane 130, such as with image data from a detection device 206.

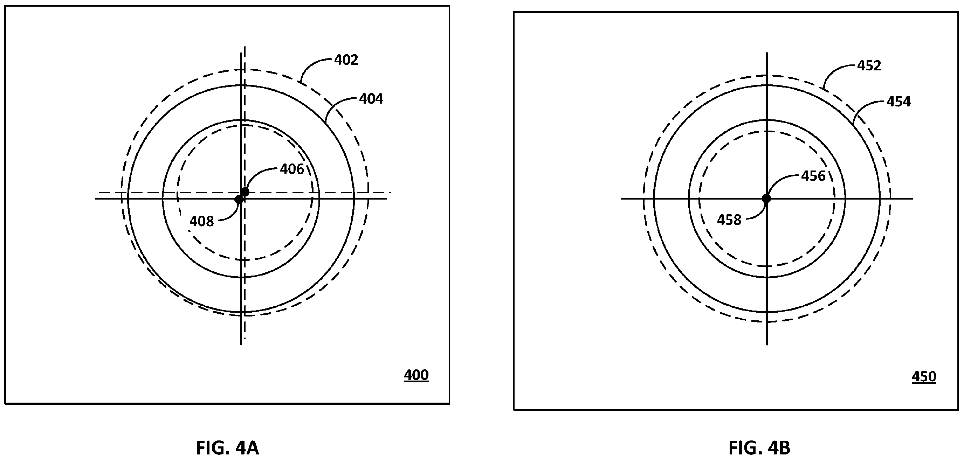

FIGs. 4A, 6A, and 8A respectively show exemplary image data 400 corresponding to a respective calibration operation. The image data 400 may respectively correspond to an exemplary calibration pattern 302 having been irradiated upon a build plane 130 in connection with a calibration operation. The image data 400 may include one or more reference images 402 and one or more calibration images 404. The calibration images 404 are shown overlaid on a corresponding reference images 402. The respective calibration images 404 and corresponding reference images 402 may be provided as combined or separate image data 400. For example, a calibration image 404 and one or more corresponding reference images 402 may be provided in separate image files and/or in a combined image file. A reference image 402 and/or a calibration image 404 may be identified in image data 400, for example, using a computer vision program that detects pixels in the respective image data 400 (e.g., the reference image 402 and/or the calibration image 404) based on one or more optically determinable properties such as brightness, color, hatching pattern, etc. Exemplary computer vision programs may utilize a contour tracing algorithm and/or a boundary tracing algorithm. Exemplary computer vision programs are available in Python programming language and may utilize open source computer vision libraries, such as OpenCV libraries, OpenCV2, and/or SimpleCV, SimpleITK, and so forth.

The calibration image 404 may be compared to the reference image 402, for example, to determine an alignment and/or misalignment with respect to the calibration image 404 and/or the reference image 402. A calibration pattern 302 may be compared to a corresponding reference pattern 300 at least in part by comparing a calibration image 404 representative of the calibration pattern 302 to a corresponding reference image 402 representative of the reference pattern 300. The calibration image 404 may be compared to the reference image 402 using any suitable digital image processing technology. In some embodiments, a reference centroid 406 corresponding to the reference image 402 may be compared to a calibration centroid 408 corresponding to the calibration image 404. A centroid (e.g., a reference centroid 406 and/or a calibration centroid 408) may be determined, including respective coordinates thereof, using any suitable digital image processing technology. The coordinates of the calibration centroid 408 may be compared to the coordinates of the reference centroid 406. An alignment and/or misalignment between the calibration image 404 and the reference image 402 may be determined by comparing the coordinates of the calibration centroid 408 may be compared to the coordinates of the reference centroid 406. Suitable digital image processing technology may determine a centroid (e.g., a reference centroid 406 and/or a calibration centroid 408), for example, using a computer vision program that detects pixels in the respective image (e.g., the reference image 402 and/or the calibration image 404) based on one or more optically determinable properties such as brightness, color, hatching pattern, etc., and performs the appropriate calculations to determine the centroid. Exemplary computer vision programs are available in Python programming language and may utilize open source computer vision libraries, such as OpenCV libraries, OpenCV2, and/or SimpleCV, SimpleITK, and so forth.

A misalignment between a calibration image 404 and a reference image 402 may indicate an askew, offset, and/or misalignment between a coordinate system associated with the beam generation device 200 (e.g., the first irradiation device 138) used to irradiate the reference pattern 300 corresponding to the reference image 402 and a coordinate system associated with the beam generation device 200 (e.g., the second irradiation device 140) used to irradiate the calibration pattern 302 corresponding to the calibration image 404. Additionally, or in the alternative, a misalignment between a calibration image 404 and a reference image 402 may indicate one or more movable components of an additive manufacturing machine being out of calibration, for example, relative to a corresponding coordinate system and/or relative to another movable component. For example, a misalignment between a calibration image 404 and a reference image 402 may indicate a misalignment as between one or more movable components included as part of or associated with an energy beam system 134 and/or an imaging system 162, and a corresponding coordinate system. Additionally, or in the alternative, such misalignment between a calibration image 404 and a reference image 402 may indicate a misalignment as between a first movable component associated with the energy beam system 134 and/or imaging system 162 corresponding to the calibration image 404 and a second movable component associated with the energy beam system 134 and/or imaging system 162 corresponding to the reference image 402.

FIGs. 4B, 6B, and 8B respectively depict exemplary calibration data 450 determined in connection with a calibration operation. The calibration data 450 may be determined at least in part from image data 400 corresponding to a respective calibration operation. For example, the calibration data 450 may be based at least in part on an alignment and/or misalignment determined between the calibration image 404 and the reference image 402. The calibration data 450 may be provided as image data 400 or any other suitable data format for performing a calibration adjustment. Calibration data 450 may be used to augment a reference image 402 and/or a calibration image 404, for example, to provide an augmented reference image 452 and/or an augmented calibration image 454, as shown. As shown, the augmented calibration images may be aligned and/or centered with a corresponding augmented reference images 452. In some embodiments, an augmented reference image 452 and/or an augmented calibration image 454 may be provided, for example, to visually depict a result of a calibration operation. The augmented reference image 452 and/or the augmented calibration image 454 may be provided for display, such as on a visual display associated with a user interface 108. It will be apricated however, that in some embodiments, an augmented reference image 452 and/or an augmented calibration image 454 need not be displayed nor even generated. Rather, in some embodiments, the augmented reference image 452 and/or the augmented calibration image 454 may be provided in the figures for the illustrative purpose of visualizing the effect of a calibration adjustment that may be implemented from calibration data 450 provided in the calibration operation. The calibration data 450 may be utilized to perform a calibration operation with respect to one or more components of an additive manufacturing machine 102, such as with respect to one or more components of an energy beam system 134 or components thereof and/or with respect to one or more imaging systems 162 or components thereof. The calibration data 450 may be utilized to perform a calibration operation with respect to one or more beam generation devices 200 such as one or more irradiation devices 138, 140 or components thereof and/or one or more light sources 216 or components thereof.

In some embodiments, a calibration operation may provide an adjustment to a first irradiation device 138 and/or a second irradiation device 140. The calibration operation may include calibrating one or more coordinate systems associated with an additive manufacturing machine 102, such as aligning a first coordinate system associated with the first irradiation device 138 with a second coordinate system associated with the second irradiation device 140. Additionally, or in the alternative, the calibration operation may include calibrating a movement of one or more movable components of an energy beam system 134, such as calibrating a movement of one or more movable components in relation to one or more coordinate systems. For example, a movement of a scanner 202 and/or an optical assembly 204 may be adjusted in relation to one or more coordinate systems. Following a calibration operation, a subsequent calibration pattern 302 may be aligned and/or centered with a previous or subsequent reference patterns 300.

In some embodiments, a calibration operation may provide an adjustment with respect to one or more detection devices 206 and/or one or more light sources 216. The calibration operation may include calibrating one or more coordinate systems associated with an imaging system 162 and/or an energy beam system 134. For example, a coordinate system associated with a first detection device 206 corresponding to the first irradiation device 138 may be aligned with a coordinate system associated with the first irradiation device 138. Additionally, or in the alternative, a coordinate system associated with a second detection device 206 corresponding to the second irradiation device 140 may be aligned with a coordinate system associated with the second irradiation device 140.

A coordinate system associated with a light source 216, such as a first light source 216, corresponding to the first irradiation device 138 may be aligned with a coordinate system associated with the first irradiation device 138 and/or a coordinate system associated with a detection device 206, such as a first detection device 206, corresponding to the first irradiation device 138. A coordinate system associated with a light source 216, such as a second light source 216, corresponding to the second irradiation device 140 may be aligned with a coordinate system associated with the second irradiation device 140 and/or with a coordinate system associated with a detection device 206, such as a second detection device 206, corresponding to the second irradiation device 140. The coordinate system associated with the light source 216 corresponding to the first irradiation device 138 may be aligned with the coordinate system associated with the light source 216 corresponding to the second irradiation device 140. The coordinate system associated with the detection device 206 corresponding to the first irradiation device 138 may be aligned with the coordinate system associated with the detection device 206 corresponding to the second irradiation device 140.

Additionally, or in the alternative, the calibration operation may include calibrating a movement of one or more movable components of a detection device 206 and/or of a beam generation device 200. For example, the one or more movable components calibrated by a calibration operation may include one or more movable components of a scanner 202, an optical assembly 204, an imaging optical element 208, a projection optical element 220, and/or an imaging lens assembly 222. Such calibration operation may include a calibration adjustment in relation to any one or more coordinate systems. Following a calibration operation, a subsequent calibration pattern 302 may be aligned and/or centered with a previous or subsequent reference patterns 300.

A calibration operation may be performed for one or more positions of a build module 110. For example, in some embodiments, a build platform 132 may be moved to a plurality of positions, such as by a build piston 156 gradually lowering the build platform 132, and a calibration operation and/or a portion of a calibration operation, may be performed at respective ones of the plurality of positions. A calibration operation may provide calibration adjustment corresponding individually to one or more positions of the build module 110, and/or collectively to a plurality of positions of the build module 110.

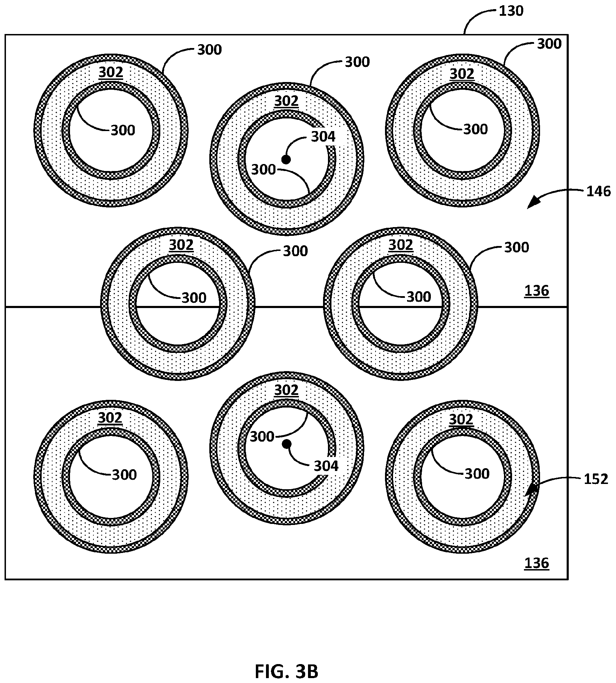

Referring again to FIGs. 3A and 3B, an exemplary build plane 130 may include a first build plane region 146 and a second build plane region 152. One or more reference patterns 300 and corresponding calibration patterns 302 may be imparted upon the build plane 130. As shown in FIG. 3A, a reference pattern 300 and a corresponding calibration pattern 302 may be irradiated upon the first build plane region 146 and/or the second build plane region 152.

As shown in FIG. 3A, with reference to the first build plane region 146, the calibration pattern 302 may be aligned and/or centered with the reference pattern 300. Additionally, or in the alternative, as shown in FIG. 3A, with reference to the second build plane region 152, a calibration pattern 302 may be misaligned from the reference pattern 300. By way of example, in the embodiment shown in FIG. 3A, a reference pattern 300 may be irradiated by the first energy beam 142 from the first irradiation device 138, and/or a calibration pattern 302 may be irradiated by the second energy beam 148 from the second irradiation device 140. Additionally, or in the alternative, a reference pattern 300 may be irradiated by the second energy beam 148 from the second irradiation device 140, and the calibration pattern 302 may be irradiated by the first energy beam 142 from the first irradiation device 138. The calibration pattern 302 and the reference pattern 300 may be sed to determine an alignment and/or misalignment as between the first irradiation device 138 and the second irradiation device 140.

FIG. 3B shows a build plane 130 with a plurality of reference patterns 300 and corresponding calibration patterns 302 projected thereon. The respective reference patterns 300 and corresponding calibration patterns 302 may be utilized to perform a calibration operation in respect of multiple regions of the build plane 130. By way of example, in the embodiment shown in FIG. 3B, at least some of the plurality of reference patterns 300 may be irradiated by the first energy beam 142 from the first irradiation device 138, and the corresponding plurality of calibration patterns 302 may be irradiated by the second energy beam 148 from the second irradiation device 140. Additionally, or in the alternative, at least some of the plurality of reference patterns 300 may be irradiated by the second energy beam 148 from the first irradiation device 138, and the corresponding plurality of calibration patterns 302 may be irradiated by the first energy beam 142 from the first irradiation device 138. In some embodiments, a calibration pattern 302 may be misaligned relative to only a portion of the build plane 130, and/or a magnitude of a misalignment may differ as between respective portions of the calibration pattern 302 and/or corresponding portions of the build plane 130. The multiple calibration patterns 302 and corresponding reference patterns 300 may allow an alignment and/or misalignment to be determined as between the first irradiation device 138 and the second irradiation device 140 with respect to respective ones of a plurality of regions of the build plane 130.

In some embodiments, as shown in FIGs. 3A and 3B, the reference pattern 300 and/or the calibration pattern 302 may have an annular shape. The ring width of a reference pattern 300 with an annular shape may be larger than the ring width of a corresponding calibration pattern 302. As shown, the calibration pattern 302 may cover the reference pattern 300 while a portion of the reference pattern 300, such as a perimeter portion, remains uncovered. By way of example, as shown in FIG. 3A with reference to the first build plane region 146, an annular calibration pattern 302 aligned and/or centered with an annular reference pattern 300 may exhibit an appearance of a series of substantially concentric regions, with a substantially common centroid. For example, the annular calibration pattern 302 and the annular reference pattern 300 may be oriented coaxially relative to one another. As shown in Fig. 3A, the reference pattern 300 and/or the calibration pattern 302 may have a centroid that corresponds to the normal point 304 of a respective energy beam 142, 148. It will be appreciated, however, that a reference pattern 300 and/or a calibration pattern 302 may have a center point that corresponds to any desired location of the build plane 130.

FIG. 4A shows exemplary image data 400 that includes a reference image 402 and a corresponding calibration image 404. The image data 400 may be provided from a detection device 206, such as a detection device 206 included as part of or associated with an imaging system 162 and/or an energy beam system 134, for configured to obtain image data 400 of the build plane 130 from one or more imaging beams 210. The image data 400 shown in FIG. 4A may correspond to the reference pattern 300 and/or the calibration pattern 302 in the second build plane region 152 of FIG. 3A. The reference image 402 may correspond to a reference pattern 300 irradiated by the first energy beam 142 from the first irradiation device 138, and the calibration image 404 may correspond to a calibration pattern 302 irradiated by the second energy beam 148 from the second irradiation device 140. Additionally, or in the alternative, the reference image 402 may correspond to a reference pattern 300 irradiated by the second energy beam 148 from the second irradiation device 140, and the calibration image 404 may correspond to a calibration pattern 302 irradiated by the first energy beam 142 from the first irradiation device 138.

As shown in FIG. 4A, the reference image 402 has a reference centroid 406 that differs from a calibration centroid 408 of the calibration image 404. The difference between the reference centroid 406 and the calibration centroid 408 in the image data 400 may indicate a misalignment between the reference image 402 and the corresponding calibration image 404. A misalignment between the reference image 402 and the corresponding calibration image 404, may indicate a misalignment between the corresponding calibration pattern 302 and reference pattern 300. Such a misalignment may indicate a misalignment between a coordinate system associated with the first irradiation device 138 and a coordinate system associated with the second irradiation device 140. Additionally, or in the alternative, such a misalignment may indicate a misalignment of one or more movable components in relation to a coordinate system and/or in relation to respective irradiation devices 138, 140.

FIG. 4B shows exemplary calibration data 450 that reflects a calibration adjustment applied to the image data 400 shown in FIG. 4A. As shown in FIG. 4B, in some embodiments, the calibration adjustment may include and/or result in aligning the calibration centroid 408 with the reference centroid 406. For example, a coordinate system associated with the first irradiation device 138 and/or a coordinate system associated with the second irradiation device 140 may be adjusted such that the calibration centroid 408 becomes aligned with the reference centroid 406. Additionally, or in the alternative, a calibration of one or more movable components may be adjusted such that subsequently determined reference pattern 300 and corresponding reference image 402, and/or a subsequently determined calibration pattern 302 and corresponding calibration image 404, would result in or would be expected to result in the calibration centroid 408 being aligned with the reference centroid 406.

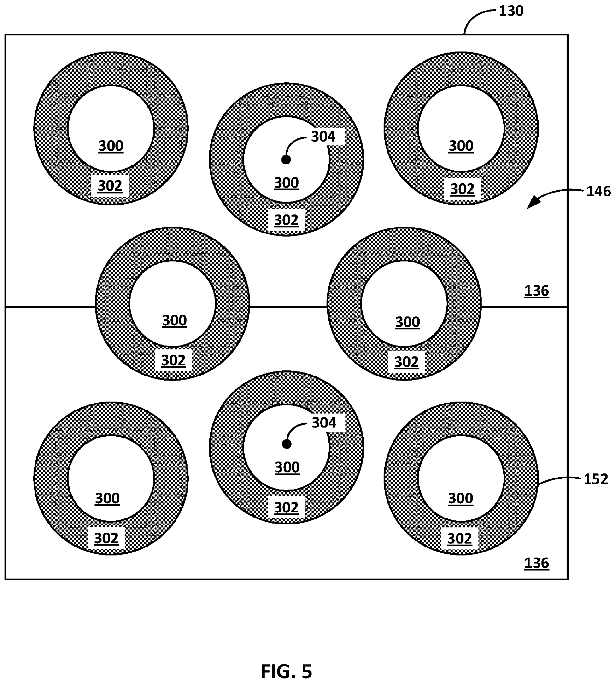

Now turning to FIG. 5, another exemplary embodiment will be described. As shown in FIG. 5 a calibration operation may utilize a plurality of reference patterns 300 and corresponding calibration patterns 302. As shown in FIG 5, the plurality of reference patterns 300 may be irradiated upon the build plane 130 with a light source 216 associated with an imaging system 162. The light source 216 and/or the imaging system 162 may be associated with the first irradiation device 138 and/or the second irradiation device 140. For example, at least some of the plurality of reference patterns 300 may be irradiated by a first light source 216 associated with the first irradiation device 138, such as a first light source 216 from a first imaging system 162 associated with the first irradiation device 138. A corresponding plurality of calibration patterns 302 may be irradiated by the first energy beam 142 from the first irradiation device 138, for example, to determine an alignment and/or misalignment as between the first irradiation device 138 and the first light source 216. Additionally, or in the alternative, a corresponding plurality of calibration patterns 302 may be irradiated by the second energy beam 148 from the second irradiation device 140, for example, to determine an alignment and/or misalignment as between the second irradiation device 140 and the first light source 216, and/or as between the second irradiation device 140 and the first irradiation device 138 associated with the first light source 216.

Additionally, or in the alternative, at least some of the plurality of reference patterns 300 may be irradiated by a second light source 216 associated with the second irradiation device 140, such as a second light source 216 from a second imaging system 162 associated with the second irradiation device 140. A corresponding plurality of calibration patterns 302 may be irradiated by the second energy beam 148 from the second irradiation device 140, for example, to determine an alignment and/or misalignment as between the second irradiation device 140 and the second light source 216. Additionally, or in the alternative, a corresponding plurality of calibration patterns 302 may be irradiated by the first energy beam 142 from the first irradiation device 138, for example, to determine an alignment and/or misalignment as between the first irradiation device 138 and the second light source 216, and/or as between the first irradiation device 138 and the second irradiation device 140 associated with the second light source 216.

As shown in Fig. 5, the reference pattern 300 may be in the shape of a circle, and the calibration pattern 302 may be in the shape of an annulus, such as an annulus surrounding the circle. For example, when aligned, an annular shaped calibration pattern 302 may be centered around a circular shaped reference pattern 300. For example, the annular calibration pattern 302 and the circular reference pattern 300 may be oriented coaxially relative to one another.

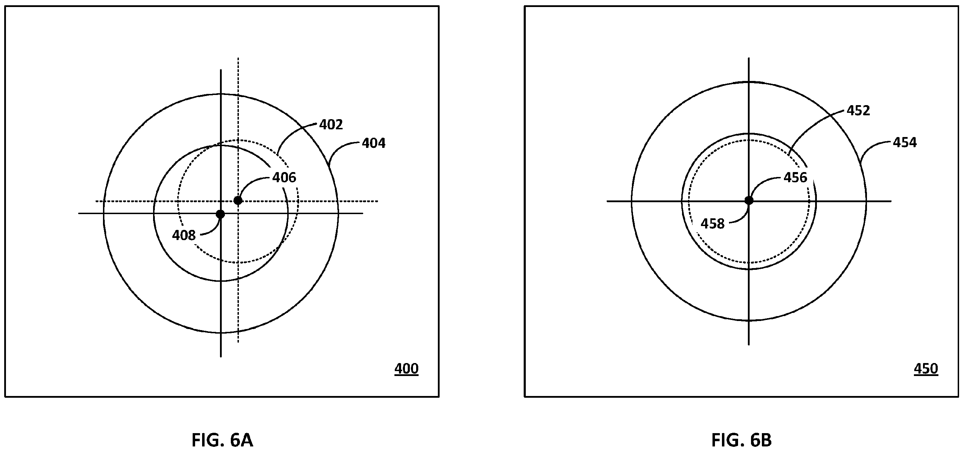

FIG. 6A shows exemplary image data 400 that includes a reference image 402 and a corresponding calibration image 404 respectively corresponding to a reference pattern 300 and corresponding calibration pattern 302 from the build plane 130 shown in FIG. 5. As shown, calibration centroid 408 may differ from a corresponding reference centroid 406. The image data 400, including the reference image 402, corresponding calibration image 404, and the calibration centroid 408 and corresponding reference centroid 406, may be determined using image processing technology as described herein.

FIG. 6B shows exemplary calibration data 450 that reflects a calibration adjustment applied to the image data 400 shown in FIG. 6A. As shown in FIG. 6B, in some embodiments, the calibration adjustment may include and/or result in aligning the calibration centroid 408 with the reference centroid 406. For example, a coordinate system associated with the first irradiation device 138 and/or a coordinate system associated with the second irradiation device 140 may be adjusted such that the calibration centroid 408 becomes aligned with the reference centroid 406. Additionally, or in the alternative, a calibration of one or more movable components may be adjusted as described herein, for example, such that a subsequently determined reference pattern 300 and corresponding reference image 402, and/or a subsequently determined calibration pattern 302 and corresponding calibration image 404, would result in or would be expected to result in the calibration centroid 408 being aligned with the reference centroid 406.

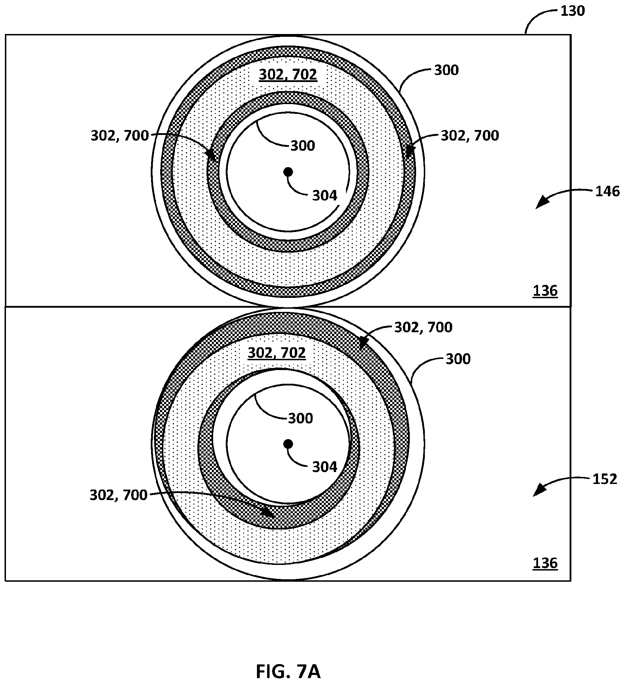

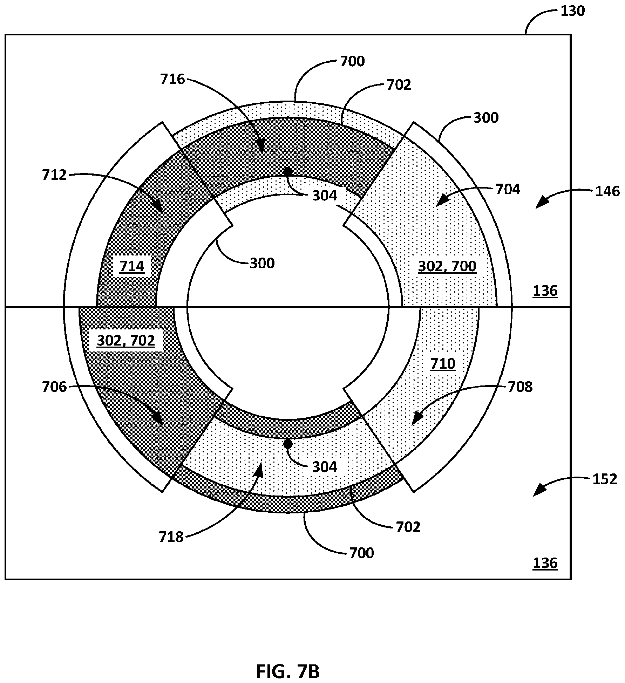

Turning now to FIGs. 7A and 7B, another exemplary embodiment will be described. As shown in FIGs. 7A and 7B, a calibration operation may utilize a reference pattern 300 and a plurality of corresponding calibration patterns 302. For example, a calibration operation may utilize a reference pattern 300, a first calibration pattern 700 corresponding to the reference pattern 300, and a second calibration pattern 702 corresponding to the reference pattern 300. In some embodiments, the first calibration pattern 700 may be generated by a first beam generation device 200, such as a first irradiation device 138 and/or a first light source 216 associated with the first irradiation device 138. Additionally, or in the alternative, the second calibration pattern 702 may be generated by a second beam generation device 200, such as a second irradiation device 140 and/or a second light source 216 associated with the second irradiation device 140.

As shown in FIG. 7A, with reference to the first build plane region 146, the first calibration pattern 700 and/or the second calibration pattern 702 may be aligned and/or centered with the reference pattern 300. Additionally, or in the alternative, as shown with reference to the second build plane region 152, the first calibration pattern 700 and/or the second calibration pattern 702 may be misaligned from the reference pattern 300. By way of example, as shown in FIG. 7A with reference to the second build plane region 152, the first calibration pattern 700 may be misaligned relative to the second calibration pattern 702 in a first direction and/or magnitude. Additionally, or in the alternative, the first calibration pattern 700 may be misaligned relative to the reference pattern 300 in a second direction and/or magnitude, and/or the second calibration pattern 702 may be misaligned relative to the reference pattern 300 in a third direction and/or magnitude.

In some embodiments, a calibration operation may include a calibration adjustment configured to compensate for a misalignment between the first calibration pattern 700 and the second calibration pattern 702. Additionally, or in the alternative, a calibration operation may include a calibration adjustment configured to compensate for a misalignment between the first calibration pattern 700 and the reference pattern 300, and/or between the second calibration pattern 702 and the reference pattern 300.

As shown in FIG. 7B, a calibration pattern 302 and/or a reference pattern 300 may be irradiated upon the build plane 130 in a region corresponding to one or more sectors, such as one or more annulus sectors. In some embodiments, a plurality of sectors, such as annulus sectors, may be assigned to respective portions of the build plane 130. A calibration operation may include irradiating a first calibration pattern 700 corresponding to a first beam generation device 200, a second calibration pattern 702 corresponding to a second beam generation device 200, and/or a reference pattern 300 upon one or more of such sectors to determine a respective alignment and/or misalignment as between one another. For example, a first calibration pattern 700 and a reference pattern 300 may be irradiated upon a first sector 704, and/or a second calibration pattern 702 and a reference pattern 300 may be irradiated upon a second sector 706. Additionally, or in the alternative, a plurality of first calibration patterns 700 and/or a plurality of second calibration patterns 702 may be irradiated upon a corresponding plurality of sectors.

In some embodiments, a plurality of annular calibration patterns 302 may have differing radii and/or ring widths. Such differing radii and/or ring widths may be selected, for example, at least in part to determine an alignment and/or a misalignment in respect of differing radial locations of the build plane 130, such as differing radial locations relative to a normal point 304 on the build plane 130. For example, in some embodiments, an annular calibration pattern 302, such as a first annular calibration pattern 700 having a first radius and/or ring width, may be irradiated upon the first sector 704, and/or an annular calibration pattern 302, such as a third annular calibration pattern 708 having a third radius and/or ring width, may be irradiated upon a third sector 710. Additionally, or in the alternative, an annular calibration pattern 302, such as a second annular calibration pattern 702 having a second radius and/or ring width, may be irradiated upon the second sector 706, and/or an annular calibration pattern 302, such as a fourth annular calibration pattern 712 having a fourth radius and/or ring width, may be irradiated upon a fourth sector 714.

In some embodiments, a first calibration pattern 700 and a second calibration pattern 702 may both be irradiated upon a sector. For example, in a fifth sector 716, a first calibration pattern 700 may be irradiated upon a reference pattern 300, and a second calibration pattern 702 may be irradiated upon the first calibration pattern 700. Additionally, or in the alternative, in a sixth sector 718, a second calibration pattern 702 may be irradiated upon a reference pattern 300, and a first calibration pattern 700 may be irradiated upon the second calibration pattern 702. The respective combinations of calibration patterns 302 and corresponding reference patterns 300 in the respective sectors may allow comparison of respective ones of the calibration patterns 302 to one another and/or to the reference pattern 300.

The respective sectors may be configured to occupy portions of the first build plane region 146 and/or the second build plane region 152. As shown in FIG. 7B, the plurality of sectors may occupy at least a portion of both the first build plane region 146 and the second build plane region 152. The respective calibration patterns 302 and/or corresponding reference patterns 300 may be configured to determine, for a beam generation device 200 associated with a normal point 304 on the first build plane region 146, an alignment and/or misalignment when directing an energy beam 142, 148 incident upon the second build plane region 152. Additionally, or in the alternative, the respective calibration patterns 302 and/or corresponding reference patterns 300 may be configured to determine, for a beam generation device 200 associated with a normal point 304 on the second build plane region 152, an alignment and/or misalignment when directing an energy beam 142, 148 incident upon the first build plane region 146.

In some embodiments, the first sector 704 may be utilized to determine an alignment and/or misalignment as between a first calibration pattern 700 and a reference pattern 300. Additionally, or in the alternative, the second sector 706 may be utilized to determine an alignment and/or misalignment as between a second calibration pattern 702 and the reference pattern 300. The first calibration pattern 700 may be irradiated upon the build plane 130 with a first energy beam 142 from a first irradiation device 138. The second calibration pattern 702 may be irradiated upon the build plane 130 with a second energy beam 148 from a second irradiation device 140. The calibration pattern 302 may be irradiated upon the build plane 130 with a light source 216, such as a light source 216 from an imaging system 162 associated with the first irritation device 138 and/or the second irradiation device 140. The first sector 704 may be utilized to determine an alignment and/or misalignment as between the first calibration pattern 700 and the reference pattern 300 when located within the first build plane region 146. The third sector 710 may be utilized to determine an alignment and/or misalignment as between the reference pattern 300 and a third calibration pattern 708 located within the second build plane region 152. The third calibration pattern 708 may be irradiated upon the build plane 130 with the first energy beam 142 from the first irradiation device 138. The fourth sector 714 may be utilized to determine an alignment and/or misalignment as between the reference pattern 300 and a fourth calibration pattern 712 located within the first build plane region 146. The fourth calibration pattern 712 may be irradiated upon the build plane 130 with the second energy beam 148 from the second irradiation device 140. The fifth sector 716 may be utilized to determine an alignment and/or misalignment as between the first calibration pattern 700 and the second calibration pattern 702 when located in the first build plane region 146. The sixth sector 718 may be utilized to determine an alignment and/or misalignment as between the second calibration pattern 702 and the first calibration pattern 700 when located in the second build plane region 152.

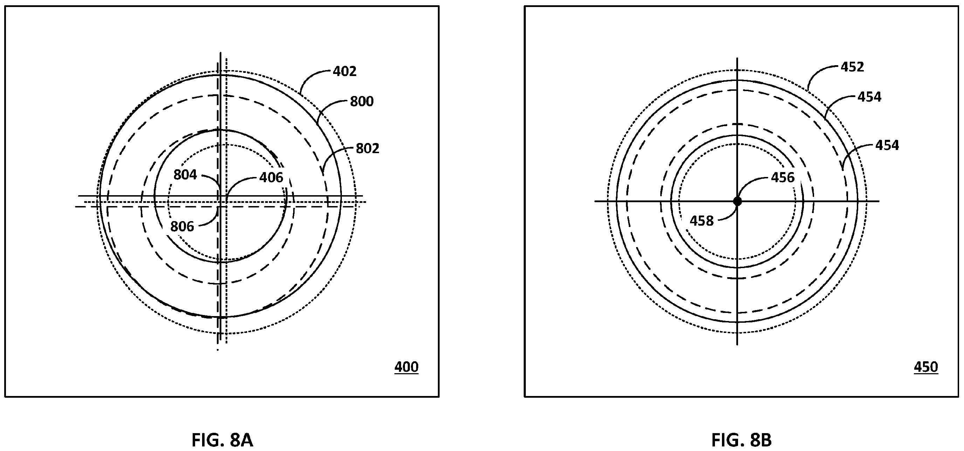

FIG. 8A shows exemplary image data 400 that includes a reference image 402, a first calibration image 800, and a second calibration image 802. The image data 400, may be determined using image processing technology as described herein. The reference image 402 may correspond to the reference pattern 300 shown in FIG. 7A. The first calibration image 800 may correspond to the first calibration pattern 700 shown in FIG. 7A, and/or the second calibration image 802 may correspond to the second calibration pattern 702 shown in FIG. 7A. As shown, a first calibration centroid 804 corresponding to the first calibration image 800 may differ from a corresponding reference centroid 406. Additionally, or in the alternative, a second calibration centroid 806 corresponding to the second calibration image 802 may differ from the reference centroid 406 and/or from the first calibration centroid 804.

FIG. 8B shows exemplary calibration data 450 that reflects a calibration adjustment applied to the image data 400 shown in FIG. 8A. As shown in FIG. 8B, in some embodiments, the calibration adjustment may include and/or result in aligning the first calibration centroid 804 with the reference centroid 406. For example, a coordinate system associated with the first irradiation device 138 and/or a coordinate system associated with the second irradiation device 140 may be adjusted such that the first calibration centroid 804 and/or the second calibration centroid 806 becomes aligned with the reference centroid 406, and/or such that the first calibration centroid 804 becomes aligned with the second calibration centroid 806. Additionally, or in the alternative, a calibration of one or more movable components may be adjusted as described herein. For example, one or more moveable components associated with the first irradiation device 138 may be adjusted such that a subsequently determined reference pattern 300 and corresponding reference image 402, and/or a subsequently determined first calibration pattern 700 and corresponding first calibration image 800, would result in or would be expected to result in the first calibration centroid 804 being aligned with the reference centroid 406 and/or the second calibration centroid 806. A calibration of one or more movable components associated with the second irradiation device 140 may be adjusted such that a subsequently determined reference pattern 300 and corresponding reference image 402, and/or a subsequently determined second calibration pattern 702 and corresponding second calibration image 802, would result in or would be expected to result in the second calibration centroid 806 being aligned with the reference centroid 406 and or with the first calibration centroid 804.

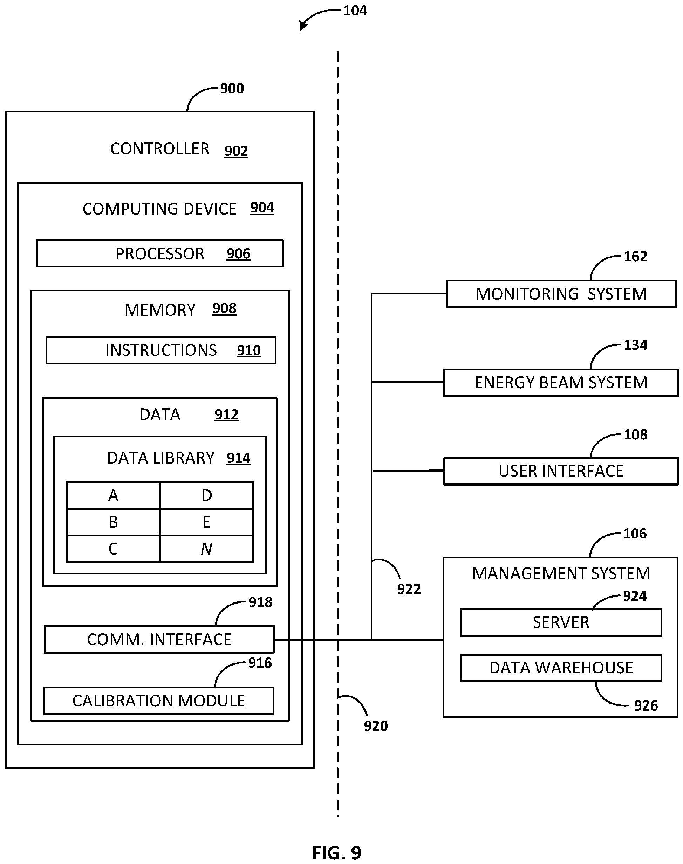

Now turning to FIG. 9, and exemplary control system 104 will be described. In some embodiments, a control system 104 may be configured to perform one or more calibration operations. The one or more calibration operations may be configured to calibrate one or more aspects or features of an additive manufacturing machine 102 and/or an energy beam system 134. The one or more calibration operations may additionally or alternatively be configured to calibrate an aspect or feature of one or more irradiation devices 138, 140, and/or one or more imaging systems 162, included as part of or associated with an additive manufacturing machine 102 and/or an energy beam system 134. A control system 104 may be configured to output one or more control commands associated with an additive manufacturing machine 102. The control commands may include calibration control commands. A calibration control command may be configured to cause a calibration module 214 associated with the control system 104 and/or the additive manufacturing 10 to perform one or more calibration operations that the calibration module 214 may be configured to perform.

As shown in FIG. 9, an exemplary control system 104 includes a controller 900 configured to control one or more irradiation parameters associated with an additive manufacturing machine 102. The controller 900 may be communicatively coupled with an additive manufacturing machine 102. In some embodiments, the controller 900 may be communicatively coupled with one or more components of an additive manufacturing machine 102, such as an energy beam system 134 and/or an imaging system 162. The controller 900 may also be communicatively coupled with a management system 106 and/or a user interface 108.

The controller 900 may include one or more computing devices 902, which may be located locally or remotely relative to the additive manufacturing machine 102 and/or a calibration system 250. The one or more computing devices 902 may include one or more processors 904 and one or more memory devices 906. The one or more processors 904 may include any suitable processing device, such as a microprocessor, microcontroller, integrated circuit, logic device, and/or other suitable processing device. The one or more memory devices 906 may include one or more computer-readable media, including but not limited to non-transitory computer-readable media, RAM, ROM, hard drives, flash drives, and/or other memory devices 906.

The one or more memory devices 906 may store information accessible by the one or more processors 904, including computer-executable instructions 908 that can be executed by the one or more processors 904. The instructions 908 may include any set of instructions which when executed by the one or more processors 904 cause the one or more processors 904 to perform operations, including calibration operations and/or additive manufacturing operations. Such calibration operations may include calibrating a coordinate system and/or one or more moveable components as described herein. For example, a calibration operation may include aligning a coordinate system and/or one or more moveable components associated with a first beam generation device 200, such as a first irradiation device 138, with a coordinate system and/or one or more moveable components associated with a second beam generation device 200, such as a second irradiation device 140. Additive manufacturing operations may include controlling and/or monitoring additive manufacturing operations.

The memory devices 906 may store data 910 accessible by the one or more processors 904. The data 910 can include current or real-time data 910, past data 910, or a combination thereof. The data 910 may be stored in a data library 912. As examples, the data 910 may include data 910 associated with or generated by an additive manufacturing system 100 and/or an additive manufacturing machine 102, including data 910 associated with or generated by the controller 900, an additive manufacturing machine 102, an energy beam system 134, an imaging system 162, a management system 106, a user interface 108, and/or a computing device 902. Such data 910 may include image data 400 and/or calibration data 450. The data 910 may also include other data sets, parameters, outputs, information, associated with an additive manufacturing system 100 and/or an additive manufacturing machine 102.

The controller 900 may be configured to perform one or more control operations in accordance with a control module 916. The control module 916 may include one or more calibration modules 214 and/or one or more irradiation modules 212. The control module 916 may be housed on the computing device 902, such as in memory 906, and may be executable by a processor 904. A calibration module 214 may be configured to perform a control system 104 to perform one or more calibration operations. An exemplary calibration operation may include generating a reference pattern 300 and/or a calibration pattern 302, for example, by irradiating a build plane 130 with a beam generation device 200 such as an irradiation device 138, 140 and/or a light source 216. An exemplary calibration operation may additionally or alternatively include generating image data 400, such as image data obtained using a detection device 206. The image data 400 may include a reference image 402 portraying a reference pattern 300 and/or a calibration image 404 portraying a calibration pattern 302. An exemplary calibration operation may additionally or alternatively include determining an alignment and/or misalignment between the calibration image 404 and the reference image 402. An exemplary calibration operation may additionally or alternatively include generating calibration data 450. The calibration data 450 may be determined at least in part from image data 400 An exemplary calibration operation may additionally or alternatively include calibrating one or more coordinate systems, and/or calibrating a movement of one or more movable components in relation to one another and/or in relation to one or more coordinate systems.

The one or more computing devices 902 may also include a communication interface 918, which may be used for communications with a communication network 920 via wired or wireless communication lines 922. The communication interface 918 may include any suitable components for interfacing with one or more network(s), including for example, transmitters, receivers, ports, controllers, antennas, and/or other suitable components. The communication interface 918 may allow the computing device 902 to communicate with various nodes on the communication network 920, such as nodes associated with the additive manufacturing machine 102, the energy beam system 134, the imaging system 162, the management system 106, and/or a user interface 108. The communication network 920 may include, for example, a local area network (LAN), a wide area network (WAN), SATCOM network, VHF network, a HF network, a Wi-Fi network, a WiMAX network, a gatelink network, and/or any other suitable communication network 920 for transmitting messages to and/or from the controller 900 across the communication lines 922. The communication lines 922 of communication network 920 may include a data bus or a combination of wired and/or wireless communication links.

The communication interface 918 may allow the computing device 902 to communicate with various components of an additive manufacturing system 100 and/or an additive manufacturing machine 102 communicatively coupled with the communication interface 918 and/or communicatively coupled with one another, including an energy beam system 134 and/or an imaging system 162. The communication interface 918 may additionally or alternatively allow the computing device 902 to communicate with the management system 106 and/or the user interface 108. The management system 106 may include a server 924 and/or a data warehouse 926. As an example, at least a portion of the data 910 may be stored in the data warehouse 926, and the server 924 may be configured to transmit data 910 from the data warehouse 926 to the computing device 902, and/or to receive data 910 from the computing device 902 and to store the received data 910 in the data warehouse 926 for further purposes. The server 924 and/or the data warehouse 926 may be implemented as part of a control system 104 and/or as part of the management system 106.

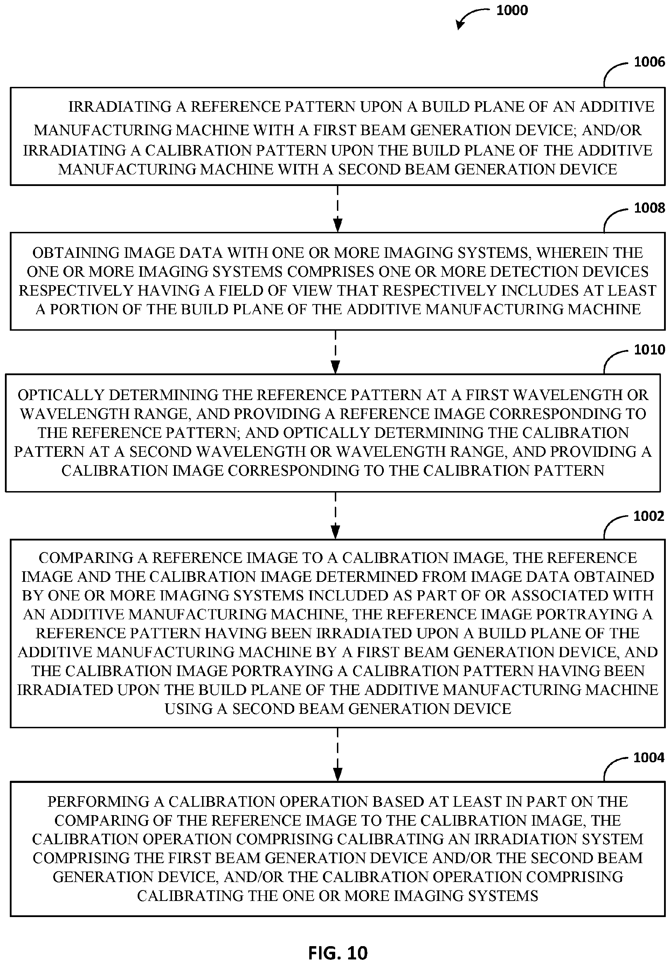

Now turning to FIG. 10, exemplary methods 1000 of additively manufacturing a three-dimensional object 114 will be described, including methods 1000 of calibrating an additive manufacturing machine 102, an energy beam system 134, and/or an imaging system 162. Exemplary methods 1000 may additionally or alternatively include methods 1000 of calibrating one or more beam generation devices 200, such as an irradiation device 138, 140 and/or a light source 216, and/or calibrating one or more detection devices 206, respectively included as part of or associated with an additive manufacturing machine 102 and/or an energy beam system 134, and/or an imaging system 162.

As shown in FIG. 10, an exemplary method 1000 may include, at block 1002, comparing a calibration image 404 to a reference image 402. The reference image 402 and the calibration image 404 may be determined from image data 400 obtained by one or more imaging systems 162 included as part of or associated with an additive manufacturing machine 102. The reference image 402 may portray a reference pattern 300 that has been irradiated upon a build plane 130 of the additive manufacturing machine 102 by a first beam generation device 200. The calibration image 404 may portray a calibration pattern 302 that has been irradiated upon the build plane 130 of the additive manufacturing machine 102 using a second beam generation device 200. Additionally, or in the alternative, an exemplary method 1000 may include, at block 1004, performing a calibration operation based at least in part on the comparing of the reference image 402 to the calibration image 404. The calibration operation may include calibrating an energy beam system 134. The energy beam system 134 may include the first beam generation device 200 and/or the second beam generation device 200. The calibration operation may additionally or alternatively include calibrating the one or more imaging systems 162.

In some embodiments, an exemplary method 1000 may include, at block 1006, irradiating the reference pattern 300 upon the build plane 130 of the additive manufacturing machine 102 with the first beam generation device 200, and/or irradiating the calibration pattern 302 upon the build plane 130 of the additive manufacturing machine 102 with the second beam generation device 200. Additionally, or in the alternative, an exemplary method 1000 may include, at block 1008, obtaining image data 400 with the one or more imaging systems 162. The one or more imaging systems 162 may include one or more detection devices 206 that respectively have a field of view 218 that respectively includes at least a portion of the build plane 130 of the additive manufacturing machine 102. Further in addition, or in the alternative, an exemplary method 1000 may include, at block 1010, optically determining the reference pattern 300 at a first wavelength or wavelength range, and providing the reference image 402 corresponding to the reference pattern 300. Additionally, or in the alternative, at block 1010, the exemplary method 1000 may include optically determining the calibration pattern 302 at a second wavelength or wavelength range, and providing a calibration image 404 corresponding to the calibration pattern 302.

Comparison of the calibration image 404 to the reference image 402 at block 1002, and/or performing the calibration operation at block 1004, may be performed using a contemporaneously or previously obtained reference image 402 and calibration image 404. Additionally, or in the alternative, comparison of the calibration image 404 to the reference image 402 at block 1002, and/or performing the calibration operation at block 1004, may be performed using a contemporaneously or previously irradiated reference pattern 300 and calibration pattern 302.

Further aspects of the invention are provided by the subject matter of the following clauses:
1. A method of calibrating an additive manufacturing machine, the method comprising: comparing a calibration image to a reference image, the reference image and the calibration image determined from image data obtained by one or more imaging systems included as part of or associated with an additive manufacturing machine, the reference image portraying a reference pattern having been irradiated upon a build plane of the additive manufacturing machine by a first beam generation device, and the calibration image portraying a calibration pattern having been irradiated upon the build plane of the additive manufacturing machine using a second beam generation device; and performing a calibration operation based at least in part on the comparing of the reference image to the calibration image, the calibration operation comprising calibrating an energy beam system comprising the first beam generation device and/or the second beam generation device, and/or the calibration operation comprising calibrating the one or more imaging systems.
2. The method of any preceding clause, comprising: irradiating the reference pattern upon the build plane of the additive manufacturing machine with the first beam generation device; and/or irradiating the calibration pattern upon the build plane of the additive manufacturing machine with the second beam generation device.
3. The method of any preceding clause, comprising: obtaining the image data with the one or more imaging systems, wherein the one or more imaging systems comprises one or more detection devices respectively having a field of view that respectively includes at least a portion of the build plane.
4. The method of any preceding clause, comprising: optically determining the reference pattern at a first wavelength or wavelength range, and providing a reference image corresponding to the reference pattern; and optically determining the calibration pattern at a second wavelength or wavelength range, and providing a calibration image corresponding to the calibration pattern.
5. The method of any preceding clause, comprising: optically determining the reference pattern and/or the calibration pattern using a contour tracing algorithm and/or a boundary tracing algorithm.
6. The method of any preceding clause, wherein the first beam generation device defines at least a portion of a first irradiation device configured to melt and/or sinter powder material with a first energy beam when additively manufacturing three-dimensional objects; and/or wherein the second beam generation device defines at least a portion of a second irradiation device configured to melt and/or sinter powder material with a second energy beam when additively manufacturing three-dimensional objects.
7. The method of any preceding clause, comprising: melting and/or sintering the reference pattern upon the build plane of the additive manufacturing machine with the first beam generation device; and melting and/or sintering the calibration pattern upon the build plane of the additive manufacturing machine with the second beam generation device.
8. The method of any preceding clause, wherein performing the calibration operation comprises: aligning a first coordinate system associated with the first beam generation device with a second coordinate system associated with the second beam generation device; and/or calibrating a movement of a first one or more movable components included as part of or associated with the first beam generation device in relation to the first coordinate system and/or in relation to the second coordinate system; and/or calibrating a movement of a second one or more movable components included as part of or associated with the second beam generation device in relation to the second coordinate system and/or in relation to the first coordinate system; and/or calibrating a movement of the first one or more movable components in relation to a movement of the second one or more movable components.
9. The method of any preceding clause, wherein the first one or more movable components and/or the second one or more movable components comprises: a scanner, an optical assembly, an imaging optical element, a projection optical element, and/or an imaging lens assembly.
10. The method of any preceding clause, wherein the first beam generation device defines at least a portion of a first irradiation device configured to melt and/or sinter powder material defining at least a portion of the build plane with an energy beam when additively manufacturing three-dimensional objects, and wherein the second beam generation device defines at least a portion of the one or more imaging systems, the second beam generation device comprising a second light source configured to irradiate the at least a portion of the build plane with an imaging beam.
11. The method of any preceding clause, comprising: irradiating the reference pattern upon the build plane of the additive manufacturing machine with the second beam generation device; and melting and/or sintering the calibration pattern upon the build plane of the additive manufacturing machine with the first beam generation device.
12. The method of any preceding clause, wherein performing the calibration operation comprises: aligning a first coordinate system associated with the first beam generation device with a second coordinate system associated with the second beam generation device; and/or calibrating a movement of a first one or more movable components included as part of or associated with the first beam generation device in relation to the first coordinate system and/or in relation to the second coordinate system; and/or calibrating a movement of a second one or more movable components included as part of or associated with the second beam generation device in relation to the second coordinate system and/or in relation to the first coordinate system; and/or calibrating a movement of the first one or more movable components in relation to a movement of the second one or more movable components.
13. The method of any preceding clause, wherein the first one or more movable components and/or the second one or more movable components comprises: a scanner, an optical assembly, an imaging optical element, a projection optical element, and/or an imaging lens assembly.
14. The method of any preceding clause, wherein comparing the calibration image to the reference image comprises: determining an alignment and/or a misalignment between the reference image and the calibration image; and/or determining an alignment and/or a misalignment between the reference pattern and the calibration pattern.
15. The method of any preceding clause, wherein comparing the calibration image to the reference image comprises: comparing a reference centroid corresponding to the reference image to a calibration centroid corresponding to the calibration image.
16. The method of any preceding clause, comprising: determining the reference centroid and/or the calibration centroid using a computer vision program.
17. The method of any preceding clause, wherein the reference pattern and the calibration pattern respectively have a circular or annular shape.
18. The method of any preceding clause, wherein the calibration pattern is configured to at least partially overlap the reference pattern, and/or wherein the calibration pattern and the reference pattern are configured to have a concentric orientation relative to one another.
19. An additive manufacturing system, comprising: an additive manufacturing machine comprising; an energy beam system comprising a first beam generation device and a second beam generation device; and a build plane, the first beam generation device configured to irradiate a reference pattern upon the build plane, and the second beam generation device configured to irradiate a calibration pattern upon the build plane; one or more imaging systems included as part of or associated with the additive manufacturing machine; and a control system included as part of or associated with the additive manufacturing machine, the control system comprising a controller; wherein the controller comprises a control module configured to perform a method, the method comprising: comparing a calibration image to a reference image, the reference image and the calibration image determined from image data obtained by the one or more imaging systems, the reference image portraying the reference pattern having been irradiated upon the build plane, and the calibration image portraying a calibration pattern having been irradiated upon the build plane; and performing a calibration operation based at least in part on the comparing of the reference image to the calibration image, the calibration operation comprising calibrating the energy beam system and/or the one or more imaging systems.
20. The additive manufacturing system of any preceding clause, wherein the additive manufacturing system is configured to perform the method of any preceding clause.
21. A computer-readable medium comprising computer-executable instructions, which when executed by a processor, cause the processor to perform a method comprising: comparing a calibration image to a reference image, the reference image and the calibration image determined from image data obtained by one or more imaging systems included as part of or associated with an additive manufacturing machine, the reference image portraying a reference pattern having been irradiated upon a build plane of the additive manufacturing machine by a first beam generation device, and the calibration image portraying a calibration pattern having been irradiated upon the build plane of the additive manufacturing machine using a second beam generation device; and performing a calibration operation based at least in part on the comparing of the reference image to the calibration image, the calibration operation comprising calibrating an energy beam system comprising the first beam generation device and/or the second beam generation device, and/or the calibration operation comprising calibrating the one or more imaging systems.
22. The computer-readable medium of any preceding clause, comprising computer-executable instructions, which when executed by a processor, cause the processor to perform the method of any preceding clause.

This written description uses exemplary embodiments to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of calibrating an additive manufacturing (10) machine, the method comprising:
comparing a calibration image (404, 454) to a reference image (402, 452), the reference image (402, 452) and the calibration image (404, 454) determined from image data (400) data (910) obtained by one or more imaging systems (162) imaging systems (162) included as part of or associated with an additive manufacturing (10) machine, the reference image (402, 452) portraying a reference pattern (300) having been irradiated upon a build plane (130) of the additive manufacturing (10) machine by a first beam generation device (200), and the calibration image (404, 454) portraying a calibration pattern (302) having been irradiated upon the build plane (130) of the additive manufacturing (10) machine using a second beam generation device (200); and
performing a calibration operation based at least in part on the comparing of the reference image (402, 452) to the calibration image (404, 454), the calibration operation comprising calibrating an energy beam (142, 148) system comprising the first beam generation device (200) and/or the second beam generation device (200), and/or the calibration operation comprising calibrating the one or more imaging systems (162).

2. The method of any preceding claim, comprising:
irradiating the reference pattern (300) upon the build plane (130) of the additive manufacturing (10) machine with the first beam generation device (200); and/or
irradiating the calibration pattern (302) upon the build plane (130) of the additive manufacturing (10) machine with the second beam generation device (200).

3. The method of any preceding claim 1, comprising:
obtaining the image data (400) with the one or more imaging systems (162), wherein the one or more imaging systems (162) comprises one or more detection devices (902) (206) respectively having a field of view (218) that respectively includes at least a portion of the build plane (130).

4. The method of any preceding claim, comprising:
optically determining the reference pattern (300) at a first wavelength or wavelength range, and providing a reference image (402, 452) corresponding to the reference pattern (300); and
optically determining the calibration pattern (302) at a second wavelength or wavelength range, and providing a calibration image (404, 454) corresponding to the calibration pattern (302).

5. The method of any preceding claim, comprising:
optically determining the reference pattern (300) and/or the calibration pattern (302) using a contour tracing algorithm and/or a boundary tracing algorithm.

6. The method of any preceding claim, wherein the first beam generation device (200) defines at least a portion of an irradiation device (138, 140) configured to melt and/or sinter powder material (120) with a first energy beam (142) when additively manufacturing three-dimensional objects (114); and/or
wherein the second beam generation device (200) defines at least a portion of a second irradiation device (140) configured to melt and/or sinter powder material (120) with a second energy beam (148) when additively manufacturing three-dimensional objects (114).

7. The method of any preceding claim, comprising:
melting and/or sintering the reference pattern (300) upon the build plane (130) of the additive manufacturing (10) machine with the first beam generation device (200); and
melting and/or sintering the calibration pattern (302) upon the build plane (130) of the additive manufacturing (10) machine with the second beam generation device (200).

8. The method of any preceding claim, wherein performing the calibration operation comprises:
aligning a first coordinate system associated with the first beam generation device (200) with a second coordinate system associated with the second beam generation device (200); and/or
calibrating a movement of a first one or more movable components included as part of or associated with the first beam generation device (200) in relation to the first coordinate system and/or in relation to the second coordinate system; and/or
calibrating a movement of a second one or more movable components included as part of or associated with the second beam generation device (200) in relation to the second coordinate system and/or in relation to the first coordinate system; and/or
calibrating a movement of the first one or more movable components in relation to a movement of the second one or more movable components.

9. The method of any preceding claim, wherein the first one or more movable components and/or the second one or more movable components comprises: a scanner (202), an optical assembly (204), an imaging optical element (208), a projection optical element (220), and/or an imaging lens assembly (222).

10. The method of any preceding claim, wherein the first beam generation device (200) defines at least a portion of a first irradiation device (138, 140) (138) configured to melt and/or sinter powder material (120) defining at least a portion of the build plane (130) with an energy beam (142, 148) when additively manufacturing three-dimensional objects (114), and
wherein the second beam generation device (200) defines at least a portion of the one or more imaging systems (162), the second beam generation device (200) comprising a second light source (216) configured to irradiate the at least a portion of the build plane (130) with an imaging beam (210).

11. The method of any preceding claim, comprising:
irradiating the reference pattern (300) upon the build plane (130) of the additive manufacturing (10) machine with the second beam generation device (200); and
melting and/or sintering the calibration pattern (302) upon the build plane (130) of the additive manufacturing (10) machine with the first beam generation device (200).

12. The method of any preceding claim, wherein performing the calibration operation comprises:
aligning a first coordinate system associated with the first beam generation device (200) with a second coordinate system associated with the second beam generation device (200); and/or
calibrating a movement of a first one or more movable components included as part of or associated with the first beam generation device (200) in relation to the first coordinate system and/or in relation to the second coordinate system; and/or
calibrating a movement of a second one or more movable components included as part of or associated with the second beam generation device (200) in relation to the second coordinate system and/or in relation to the first coordinate system; and/or
calibrating a movement of the first one or more movable components in relation to a movement of the second one or more movable components.

13. The method of any preceding claim, wherein the first one or more movable components and/or the second one or more movable components comprises: a scanner (202), an optical assembly (204), an imaging optical element (208), a projection optical element (220), and/or an imaging lens assembly (222).

14. The method of any preceding claim, wherein comparing the calibration image (404, 454) to the reference image (402, 452) comprises:
determining an alignment and/or a misalignment between the reference image (402, 452) and the calibration image (404, 454); and/or
determining an alignment and/or a misalignment between the reference pattern (300) and the calibration pattern (302).

15. An additive manufacturing (10) system, comprising:
an additive manufacturing (10) machine comprising;
an energy beam (142, 148) system comprising a first beam generation device (200) and a second beam generation device (200); and
a build plane (130), the first beam generation device (200) configured to irradiate a reference pattern (300) upon the build plane (130), and the second beam generation device (200) configured to irradiate a calibration pattern (302) upon the build plane (130);
one or more imaging systems (162) included as part of or associated with the additive manufacturing (10) machine; and
a control system (104) included as part of or associated with the additive manufacturing (10) machine, the control system (104) comprising a controller (900);
wherein the controller (900) comprises a control module (110) (916) configured to perform a method, the method comprising:
comparing a calibration image (404, 454) to a reference image (402, 452), the reference image (402, 452) and the calibration image (404, 454) determined from image data (400) obtained by the one or more imaging systems (162), the reference image (402, 452) portraying the reference pattern (300) having been irradiated upon the build plane (130), and the calibration image (404, 454) portraying a calibration pattern (302) having been irradiated upon the build plane (130); and
performing a calibration operation based at least in part on the comparing of the reference image (402, 452) to the calibration image (404, 454), the calibration operation comprising calibrating the energy beam (142, 148) system and/or the one or more imaging systems (162).
